# EUROPEAN PATENT SPECIFICATION

(11) **EP 3 852 338 B1**
(45) Date of publication and mention of the grant of the patent: **06.09.2023**
(21) Application number: 21151551.5
(22) Date of filing: 14.01.2021
(51) Int. Cl.: H04L 9/40

(54) **METHOD AND APPARATUS FOR VERIFYING DIGITAL IDENTITY, DEVICE AND STORAGE MEDIUM**
VERFAHREN UND VORRICHTUNG ZUR VERIFIZIERUNG DER DIGITALEN IDENTITÄT, VORRICHTUNG UND SPEICHERMEDIUM
PROCÉDÉ ET APPAREIL DE VÉRIFICATION D'IDENTITÉ NUMÉRIQUE, DISPOSITIF ET SUPPORT D'ENREGISTREMENT

(30) Priority: 14.01.2020 CN 202010037958
(43) Date of publication of application: 21.07.2021
(73) Proprietor: BEIJING BAIDU NETCOM SCIENCE AND TECHNOLOGY CO. LTD., 100085 Beijing (CN)
(72) Inventor: MAO, Hongbin, Beijing, 100085 (CN); PAN, Siyuan, Beijing, 100085 (CN); YUAN, Junjie, Beijing, 100085 (CN); CHEN, Haodong, Beijing, 100085 (CN); WANG, Hui, Beijing, 100085 (CN)
(74) Representative: Mewburn Ellis LLP

(56) References cited:
- WO-A2-2019/179534
- US-A1- 2019 303 600
- ABBIE BARBIR AETNA USA: "Revised draft text for Recommendation ITU-T X.1252 : Baseline identity management terms and definitions;TD1978", ITU-T DRAFT; STUDY PERIOD 2017-2020; STUDY GROUP 15; SERIES TD1978, INTERNATIONAL TELECOMMUNICATION UNION, GENEVA ; CH , vol. 10/17 28 January 2019 (2019-01-28), pages 1-28, XP044261156, Retrieved from the Internet: URL:https://www.itu.int/ifa/t/2017/sg17/do cs/190122/td/ties/plen/T17-SG17-190122-TD- PLEN-1978!!MSW-E.docx [retrieved on 2019-01-28]
- MEHMET AYDAR ET AL: "Towards a Blockchain based digital identity verification, record attestation and record sharing system", ARXIV.ORG, CORNELL UNIVERSITY LIBRARY, 201 OLIN LIBRARY CORNELL UNIVERSITY ITHACA, NY 14853, 24 June 2019 (2019-06-24), XP081379465,
- OTHMAN ASEM ET AL: "The Horcrux Protocol: A Method for Decentralized Biometric-based Self-sovereign Identity", 2018 INTERNATIONAL JOINT CONFERENCE ON NEURAL NETWORKS (IJCNN), IEEE, 13 July 2018 (2018-07-13), pages 1-7, XP033419127, DOI: 10.1109/IJCNN.2018.8489316
- MANU SPORNY ET AL: "Verifiable Credentials Data Model 1.0: Expressing verifiable information on the Web", INTERNET CITATION, 19 November 2019 (2019-11-19), XP002802832, Retrieved from the Internet: URL:https://www.w3.org/TR/vc-data-model/ [retrieved on 2021-04-29]
- LOIC LESAVRE ET AL: "A Taxonomic Approach to Understanding Emerging Blockchain Identity Management Systems", ARXIV.ORG, CORNELL UNIVERSITY LIBRARY, 201 OLIN LIBRARY CORNELL UNIVERSITY ITHACA, NY 14853, 2 August 2019 (2019-08-02), XP081578738, DOI: 10.6028/NIST.CSWP.01142020

## Description

### TECHNICAL FIELD

Embodiments of the present disclosure relate to the field of computer technology, particularly to the field of blockchain technology, and more particularly to a method and apparatus for verifying digital identity, a device and a storage medium.

### BACKGROUND

With the rapid development of Internet applications, computer automatic verification and application login connect offline entities to online virtual identities, and its convenience and importance are becoming increasingly prominent. At present, digital identity verification technology based on decentralization is in an initial phase of exploration. The system is not well defined, and there is no client that could be used by users to conveniently use and manage digital identities. Therefore, there is actually no complete set of digital identity verification system for realizing decentralization.

The document "Revised draft text for Recommendation ITU-T X.1252: Baseline identity management terms and definitions; TD1978" (ABBIE BARBIR AETNA USA) discloses a decentralized identity model.

WO 2019/179534 A2 discloses a method for decentralized-identifier creation. The method includes: receiving a request for obtaining a decentralized identifier, wherein the request comprises an account identifier; obtaining, in response to receiving the request, a public key of a cryptographic key pair; obtaining the DID based on the public key; and storing a mapping relationship between the account identifier and the obtained DID.

The document "The Horcrux Protocol: A Method for Decentralized Biometric-based Self-sovereign Identity" by OTHMAN ASEM et al. discloses a decentralized authentication protocol that relies on decentralized identifiers under development by the W3C Verifiable Claims Community Group and the concept of self-sovereign identity.

US 2019/303600 A1 discloses an interface configured to receive a request from an application for authorization to access, wherein access to the application is requested by a user, and receive a task request from the application for authorization to access a task, wherein access to the task is requested by the user. The processor is configured to authenticate the request from the application for authorization to access, determine that the task comprises a sensitive task, determine a user authentication device, provide a challenge for a digital credential to the user authentication device, wherein the digital credential is backed by data stored in a distributed ledger, receive a response from the user authentication device, determine the response is valid, and provide an authorization to access the sensitive task.

The document "Verifiable Credentials Data Model 1.0: Expressing verifiable information on the Web" by MANU SPORNY et al. provides a mechanism to express the sorts of credentials on the Web in a way that is cryptographically secure, private respecting, and machine-verifiable.

The document "A Taxonomic Approach to Understanding Emerging Blockchain Identity Management Systems" by LOIC LESAVRE et al. discloses identity management systems that are categorized into a taxonomy based on differences in blockchain architectures, governance models, and other salient features.

The document "Towards a Blockchain based digital identity verification, record attestation and record sharing system" by MEHMET AYDAR et al. discloses a blockchain based digital identity verification, record attestation and record sharing system.

### SUMMARY

The invention is defined by the appended claims. Embodiments of the present disclosure provide a method and apparatus for verifying digital identity, a device, and a storage medium, which can implement a complete digital identity verification system.

In a first aspect, the present disclosure provides a method for verifying digital identity, executed by a decentralized identity, DID, wallet. The method includes: acquiring target login information of a target verifier, in response to a login operation of a target user on the target verifier; sending, based on the target login information, a login request including a target user DID of a target user to the target verifier, to authorize the target verifier to acquire a target claim of the target user from an identity hub of the target user and verify the target user DID and the target claim; and logging in to the target verifier using the target user DID, in response to the target user DID and the target claim passing the verification.

The above disclosure has the following advantages or beneficial effects: by adding and defining architectures such as the DID wallet and the identity hub based on a DID standard formulated by the world wide web consortium W3C, the working process and access method of the entire digital identity verification system is clarified based on the interaction between the DID wallet, the identity hub and other existing structures, and a complete digital identity verification system is realized, providing the users or enterprises with the DID wallet that uses and manages DID accounts for, and ensuring an absolute ownership and control of digital identities.

Acquiring the target login information of the target verifier, in response to the login operation of the target user on the target verifier, may include: acquiring the target login information including at least a target verifier DID in response to the login operation of the target user on the target verifier, for acquiring, from a blockchain network, a DID document associated with the target verifier DID based on the target verifier DID.

The above disclosure has the following advantages or beneficial effects: the blockchain network may store DIDs and their related information, and provide information services for various participants. Correspondingly, the DID wallet may obtain the DID document associated with the target verifier DID through the blockchain network for data encryption and sharing.

Authorizing the target verifier to acquire the target claim of the target user from the identity hub of the target user, includes: sending a target site address storing the target claim in the identity hub to the target verifier, to authorize the target verifier to access a target site of the identity hub based on the target site address to acquire the target claim.

The above disclosure has the following advantages or beneficial effects: the target site address is used to instruct the target verifier to acquire the designated verifiable claim from the identity hub, and then achieve the purpose of authorizing the target verifier by sending the target site address, and realize the sharing of the verifiable claim.

Before sending the target site address storing the target claim in the identity hub to the target verifier, the method further includes: encrypting the target claim based on a proxy re-encryption mechanism.

The above disclosure has the following advantages or beneficial effects: the proxy re-encryption mechanism is used to realize the sharing of the claim, avoid the leak of the claim and ensure the safety of the data.

Encrypting the target claim based on the proxy re-encryption mechanism may include: encrypting the target claim using an advanced encryption standard, AES, key, to obtain an encrypted target claim; encrypting the AES key using a target user public key, to obtain a symmetric key ciphertext; calculating to obtain a re-encryption key, based on a target user private key, and a target verifier public key acquired from the DID document associated with the target verifier DID; and storing the encrypted target claim, the symmetric key ciphertext, and the re-encryption key into the target site address of the identity hub, to control the identity hub to re-encrypt the symmetric key ciphertext using the re-encryption key to generate and store a re-encrypted ciphertext.

The above disclosure has the following advantages or beneficial effects: the purpose of the proxy re-encryption mechanism is that the data encrypted based on the target user public key may be decrypted by a sharing party, i.e., the target verifier, using the target verifier private key to acquire the data, ensuring the safe sharing of the data.

The target site address may be used by the target verifier to: acquire the encrypted target claim and the re-encrypted ciphertext based on the target site address, and decrypt the re-encrypted ciphertext based on a target verifier private key to obtain a symmetric encryption key, and decrypt the encrypted target claim based on the symmetric encryption key to obtain the target claim.

The above disclosure has the following advantages or beneficial effects: the target site address is used to instruct the target verifier to acquire the designated verifiable claim. Correspondingly, under the protection of the proxy re-encryption mechanism, the target verifier is required to decrypt the acquired verifiable claim to ensure the safe sharing of the data.

Before the acquiring the target login information of the target verifier, in response to the login operation of the target user on the target verifier, the method may further include: searching for a target issuer that issues a claim, based on service information of issuers in a claim issuer registry; sending a claim application request to the target issuer, to control the target issuer to generate the target claim of the target user; and obtaining the target claim issued by the target issuer responding to the claim application request.

The above disclosure has the following advantages or beneficial effects: based on business requirements, the user may apply to the corresponding issuer through the DID wallet to acquire the verifiable claim, so that the user may log in to the verifier through the verifiable claim.

Obtaining the target claim issued by the target issuer responding to the claim application request, may include: receiving a target site address fed back by the target issuer responding to the claim application request; wherein, the target site address is located in the identity hub of the target user for storing a target claim proxy re-encrypted by the target issuer; accessing, based on the target site address, a target site in the identity hub to obtain the proxy re-encrypted target claim; and decrypting the proxy re-encrypted target claim using a target user private key to obtain the target claim.

The above disclosure has the following advantages or beneficial effects: since the issuance of the verifiable claim is also a data sharing process, when issuing, the issuer may also use the proxy re-encryption technology to share the issued verifiable claim with the DID wallet.

Before the accessing, based on the target site address, the target site in the identity hub to obtain the proxy re-encrypted target claim, the method may further include: sending the target user DID to the identity hub, for the identity hub to: acquire a DID document associated with the target user DID from a blockchain network, and verify a user signature of the target user using a target user public key in the DID document, to verify whether the target user is a holder of the target user DID.

The above disclosure has the following advantages or beneficial effects: During interaction between participants, any one of the participants may verify the DID digital identity of the other party based on the digital identity and related information stored in the blockchain network, based on the known DID of the other party, to confirm that the other party is the true holder of the DID known, to avoid theft or forgery of digital identities by the interacting party, and to ensure the security of the interaction.

After the obtaining the target claim issued by the target issuer responding to the claim application request, the method may include: acquiring a revocation list address from the target claim; accessing the revocation list address and obtaining a revocation list, from a personal revocation service site of the issuer that issues the target claim; and querying a revocation status of the target claim based on the revocation list.

The above disclosure has the following advantages or beneficial effects: the issuer may also revoke an issued verifiable claim. Accordingly, other participants may query the revocation status of the verifiable claim based on the revocation list address recorded in the verifiable claim to avoid using invalid verifiable claim.

Before the acquiring the target login information of the target verifier, in response to the login operation of the target user on the target verifier, the method may further include: creating the target user DID and at least one public and private key pair for the target user, in response to a DID creation request of the target user.

The above disclosure has the following advantages or beneficial effects: the DID wallet provides the user with a DID creation service to provide the user with a globally unique digital identity.

In a second aspect, the present disclosure provide a method for verifying digital identity, executed by a verifier. The method includes: in response to a login request including a target user decentralized identity, DID, of a target user sent by a target DID wallet, acquiring a target claim of the target user from an identity hub of the target user; verifying the target user DID and the target claim; and determining that the target user successfully logs in using the target user DID, in response to the target user DID and the target claim passing the verification.

The above disclosure has the following advantages or beneficial effects: by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, so that the verifier allows the user to log in using DID with the verification of the DID and the verifiable claim.

Acquiring the target claim of the target user from the identity hub of the target user includes: acquiring a target site address storing the target claim, based on an authorization result of the target DID wallet for the verifier; and accessing a target site of the identity hub based on the target site address to obtain the target claim.

The above disclosure has the following advantages or beneficial effects: the target site address is used to instruct the target verifier to acquire the designated verifiable claim, and then when the verifier receives the target site address, it is authorized by the DID wallet to realize the sharing of the verifiable claim.

Accessing the target site of the identity hub based on the target site address to obtain the target claim includes: accessing the target site of the identity hub based on the target site address, to obtain an encrypted target claim and a re-encrypted ciphertext; wherein the encrypted target claim and the re-encrypted ciphertext are encrypted and generated based on a proxy re-encryption mechanism; decrypting the re-encrypted ciphertext using a verifier private key, to obtain a symmetric encryption key; and decrypting the encrypted target claim using the symmetric encryption key, to obtain the target claim.

The above disclosure has the following advantages or beneficial effects: the proxy re-encryption mechanism is used to realize the sharing of the verifiable claim, avoid the leak of the verifiable claim and ensure the security of the data.

Verifying the target user DID and the target claim may include: verifying whether the target user is a holder of the target user DID, according to a user signature of the target user, wherein the user signature is included in the login request; and in response to verifying that the target user is the holder of the target user DID, verifying the target claim based on at least one of: an issuer issuing the target claim, a claim type, a validity period, or a revocation status of the target claim.

The above disclosure has the following advantages or beneficial effects: during interaction between participants, any one of the participants may verify the DID digital identity of the other party based on the known DID of the other party, to confirm that the other party is the true holder of the DID known, to avoid theft or forgery of digital identities by the interacting party, and to ensure the safety of the interaction. Therefore, the verifier may determine whether the user has a login authority by verifying the verifiable claim on the premise that the DID is verified.

Verifying whether the target user is the holder of the target user DID, according to the user signature of the target user, may include: acquiring a DID document associated with the target user DID from a blockchain network, based on the target user DID; and verifying the user signature of the target user, based on a target user public key in the DID document associated with the target user DID, to verify whether the target user is the holder of the target user DID.

The above disclosure has the following advantages or beneficial effects: for a login verifier that requires verifiable claim verification, the verifiable claim verification may be used to verify whether the user has authority to login, to ensure the safety of user login and the safety of the verifier.

In another aspect, the present disclosure provides an electronic device that includes: at least one processor; and a memory, communicatively connected to the at least one processor; where, the memory, storing instructions executable by the at least one processor, the instructions, when executed by the at least one processor, cause the at least one processor to perform the method for verifying digital identity according to the first aspect, or to perform the method for verifying digital identity according to the second aspect.

In another aspect, the present disclose provides a non-transitory computer readable storage medium, storing computer instructions, the computer instructions, being used to cause the computer to perform the method for verifying digital identity according to the first aspect, or to perform the method for verifying digital identity according to the second aspect.

The above disclosure has the following advantages or beneficial effects: the user may operate the DID wallet to acquire the target login information of the target verifier, and then the user may send a login request to the target verifier through the DID wallet by using a target user DID account, to authorize the target verifier to acquire the target claim of the target user from the identity hub of the target user, thus, based on the verification on the target user DID and the target claim by the target verifier, the target user DID is used to log in to the target verifier.

According to the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

Other effects of the above alternative methods will be described below in conjunction with specific embodiments.

### BRIEF DESCRIPTION OF THE DRAWINGS

The accompanying drawings are used to better understand the present solution and do not constitute a limitation to the present disclosure, in which:
Fig. 1 is a schematic structural diagram of a digital identity verification system provided by an embodiment of the present disclosure;
Fig. 2 is a flowchart of a method for verifying digital identity according to a first embodiment of the present disclosure;
Fig. 3 is a flowchart of logging in to a verifier by using DID according to the first embodiment of the present disclosure;
Fig. 4 is an example diagram of authorizing a verifier to acquire a claim according to the first embodiment of the present disclosure;
Fig. 5 is a flowchart of a method for verifying digital identity according to a second embodiment of the present disclosure;
Fig. 6 is an example diagram of a verifier acquiring a claim according to the second embodiment of the present disclosure;
Fig. 7 is a flowchart of logging in to a verifier by using DID and claim according to the second embodiment of the present disclosure;
Fig. 8 is a flowchart of applying for a claim according to a third embodiment of the present disclosure;
Fig. 9 is a schematic diagram of applying for a claim according to the third embodiment of the present disclosure;
Fig. 10 is a schematic diagram of issuing a claim according to the third embodiment of the present disclosure;
Fig. 11 is a schematic diagram of revoking a claim according to the third embodiment of the present disclosure;
Fig. 12 is a flowchart of a method for verifying digital identity according to a fourth embodiment of the present disclosure;
Fig. 13 is a flowchart of a method for verifying digital identity according to a fifth embodiment of the present disclosure;
Fig. 14 is a schematic diagram of verifying a claim according to the fifth embodiment of the present disclosure;
Fig. 15 is a schematic structural diagram of an apparatus for verifying digital identity according to a sixth embodiment of the present disclosure;
Fig. 16 is a schematic structural diagram of an apparatus for verifying digital identity according to a seventh embodiment of the present disclosure; and
Fig. 17 is a block diagram of an electronic device used to implement the method for verifying digital identity according to an embodiment of the present disclosure.

### DETAILED DESCRIPTION OF EMBODIMENTS

The following describes exemplary embodiments of the present disclosure with reference to the accompanying drawings, which include various details of embodiments of the present disclosure to facilitate understanding, and should be regarded as merely exemplary. Therefore, those of ordinary skill in the art should realize that various changes and modifications may be made to the embodiments described herein without departing from the scope of the present disclosure. Likewise, for clarity and conciseness, descriptions of well-known functions and structures are omitted in the following description.

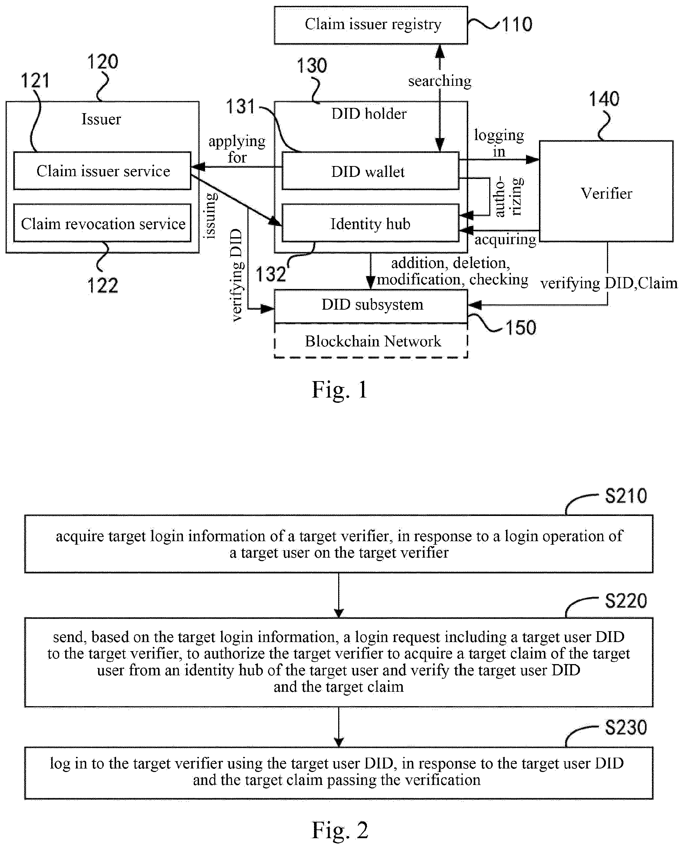

In order to clearly describe the technical solution of embodiments of the present disclosure, an architecture diagram of a digital identity verification system is first introduced. Fig. 1 is an architecture schematic diagram of a digital identity verification system provided by an embodiment of the present disclosure. Based on a DID (Decentralized Identity) standard formulated by W3C (World Wide Web Consortium), the system adds and defines architectures such as a DID wallet and an identity hub, and regulates interaction processes between the architectures to realize the management, verification and use on decentralized digital identity, etc. DID may be used to identify the identity of an individual, the identity of an organization, or even the identity of an item.

Referring to Fig. 1, the system includes a claim issuer registry 110, an issuer 120, a DID holder 130, a verifier 140 and a DID subsystem 150, etc. Each of the participants has a DID account, as the participant's globally unique digital identity.

The claim issuer registry 110 is used to uniformly release service information of the public and known issuer 120 to the public, so as to facilitate a user to apply for a verifiable credential claim (referred to as claim in the present disclosure for short).

The issuer 120 may register with the claim issuer registry 110 in advance, to configure the service information thereof in the claim issuer registry 110 for release. The service information may include service site information, applicable claim type, and information required from an applicant, etc. The issuer 120 may particularly include a claim issuer service 121 and a claim revocation service 122. The claim issuer service 121 is used for issue a claim. For example, a bank, as an issuer, may use the DID account of the bank to issue an asset certificate for customers of the bank. The claim revocation service 122 is used to revoke a claim issued by the issuer 120. The issuer also includes a personal revocation service endpoint, which is used to store a claim revocation list.

The DID holder 130 includes a DID wallet 131 and an identity hub 132. The DID wallet 131 may be any form of application, such as a small program. Through the DID wallet 131, a user may create a DID, update a DID document, use the DID to apply to the issuer 120 for a claim, and use the DID to log in to the verifier 140. The DID may be used as a key domain and the DID document may be used as a value domain, which are stored in a blockchain network as a key-value pair. The DID document is used to store detailed data associated with a DID account, such as key information and site access information. The identity hub 132 refers to a user data warehouse that is controllable by the user, allowing to be independently deployed and used by the user, and is used to functions of hosting user data and authorizing accessing.

The verifier 140 refers to a third-party application, website, organization, or device that can be logged in by using DID, or DID and claim. The verifier 140 is for verifying whether the DID holder 130 owns the DID based on the challenge-response mechanism, requesting required claim from the DID holder 130, and performing digital identity verification on the obtained claim.

The DID subsystem 150 provides DID on-chain and DID resolver services. Particularly, after a user creates a DID by using the DID wallet 131, the user only has an offline DID at this time. To make the DID truly effective, the DID-related information, served as the DID document, needs to be put on-chain. DID resolve, that is, the DID subsystem 150 provides the function of resolving the DID document from the DID. During a user logs in on the verifier 140, the verifier 140 needs to confirm whether the user is the holder of the DID through challenge-response mechanism, and the core of challenge-response is that the verifier 140 constructs a challenge based on a public key in the DID document to make the user respond. Therefore, the verifier 140 may obtain the DID document through DID resolve.

Correspondingly, the system includes a blockchain network for storing digital identities and related information, and a blockchain Layer 2 (L2) node (DID germ) is used to package a DID operation into a transaction on-chain, thereby increasing TPS (Transactions Per Second) of Layer 1 (L1) of the blockchain. Correspondingly, the issuer 120, the DID holder 130, and the verifier 140 may use the digital identities and other related information as transaction data, and put the data onto the blockchain network for storage through the DID subsystem 150, realizing the addition, deletion, modification, and checking of the digital identities and other related information. The DID subsystem 150 may also acquire the digital identities and other related information from the blockchain network for digital identity verification. Alternatively, the issuer 120, the DID holder 130, and the verifier 140 may also serve as blockchain nodes or lightweight nodes, to directly send requests to the blockchain, and receive the transaction data fed back by the blockchain network. In addition, the system may also include a DIF universal resolver for resolving all DIDs.

In embodiments of the present disclosure, following the DID standard formulated by W3C, the format of DID is defined as follows:
did:ccp:<DID String>.

Here, ccp represents the DID specification proposed in the present embodiment. The present embodiment does not limit the proposed DID specification, and any DID specification proposed based on the framework of the digital identity verification system in the present embodiment may be applied to the present embodiment. DID String is a globally unique identifier of digital identity. The present embodiment proposes an algorithm for calculating DID String, that is, using the DID document as input, and DID String is generated using the following algorithm:

<DID String> = base58(ripemd160(sha256(<Base DID Document>))). Here, base58(), ripemd160(), sha256() are encryption functions.

Correspondingly, the digital identity related information may be defined in the DID document as needed. For example, the digital identity related information may include public key list information, main public key information, backup public key information, designated public key information used for verifying DID, restored public key list, and/or site information that can use the DID.

### First embodiment

Fig. 2 is a flowchart of a method for verifying digital identity according to a first embodiment of the present disclosure. The present embodiment is applicable to the scenario where the interaction with a verifier is through a DID wallet, based on the verification on DID and claim, the user logs in to the verifier using the DID. The method may be executed by the DID wallet and may be performed by an apparatus for verifying digital identity. The apparatus is implemented in software and/or hardware, and is preferably configured in an electronic device, such as a terminal device of a DID holder to which the DID wallet belongs. As shown in Fig. 2, the method specifically includes the following:

S210, acquiring target login information of a target verifier, in response to a login operation of a target user on the target verifier.

In an embodiment of the present disclosure, the target user refers to a user who uses the DID wallet, which may be an individual user or an enterprise user. If the target user owns a DID account, the user may directly use the DID wallet to manage and use the DID and related information thereof. The addition, deletion, modification, and checking of the DID and related information thereof may also be synchronized to the blockchain network. If the target user does not currently owns a DID account, the user may create a DID account for himself through the DID wallet. Correspondingly, in response to a DID creation request of the target user, the DID wallet creates a target user DID and at least one pair of public and private key for the target user. A plurality of pairs of public and private key may be master and backup for each other, and the usage method of the plurality of pairs of public and private key may be recorded in a DID document associated with the created DID account.

In the present embodiment, the target verifier refers to a platform that the target user is to log in using the DID, such as a third-party application, website, institution, or device. The DID wallet may log in to the target verifier based on a variety of methods, such as an account and password login mode or scanning a quick response (QR) code.

In the present embodiment, the target login information refers to information required to log in to the target verifier, which may include login address loginUrl of the target verifier, unique identifier loginID used to identify a login behavior of the target user, a target verifier DID, required claim type and other information.

Particularly, the target user may perform the login operation on the DID wallet based on a login mode of the target verifier, and acquire the target login information of the target verifier accordingly. Furthermore, based on the target verifier DID in the target login information, the DID document associated with the target verifier DID may be obtained from the blockchain network, so as to acquire a target verifier public key from the DID document for encryption and use during data sharing.

For example, the target user may operate on a local page or page of other devices to select a target verifier to log in, and choose to use DID login/verification mode, to display a QR code for logging in to the target verifier on the page. The target user uses the DID wallet to scan the QR code and confirm the login on the DID wallet. Correspondingly, the DID wallet may obtain the target login information carried on the QR code by scanning the QR code.

S220, sending, based on the target login information, a login request including a target user DID to the target verifier, to authorize the target verifier to acquire a target claim of the target user from an identity hub of the target user and verify the target user DID and the target claim.

In an embodiment of the present disclosure, the login request is used to trigger the target verifier to perform digital identity verification on the target user who is to log in. The login request may include information such as the target user DID, loginID, and user signature. Correspondingly, the target verifier may associate a series of login behaviors of the target user based on the loginID, and may also acquire a DID document associated with the target user DID from the blockchain network based on the target user DID to obtain a target user public key from the DID document, and verify the user signature using the target user public key, to verify whether the target user is the true holder of the target user DID, and prevent digital identities from being leaked or forged.

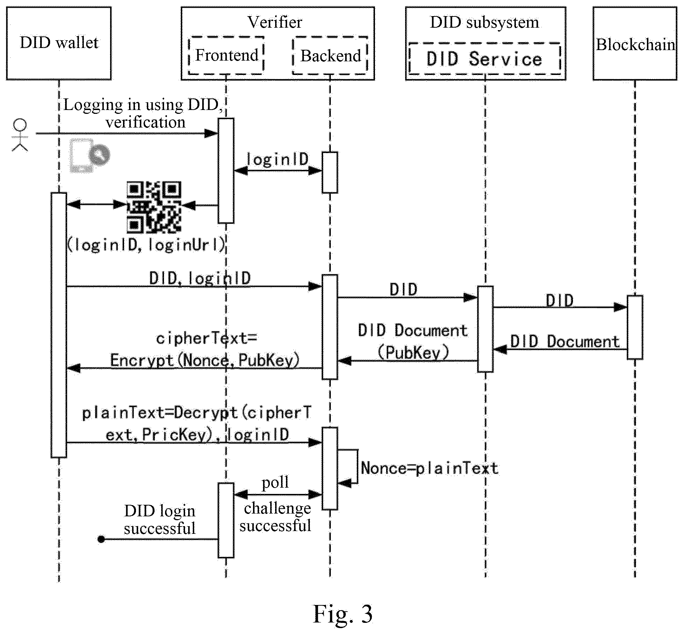

In the present embodiment, for the login mode that only uses DID to log in to the verifier, the flow is as shown in Fig. 3. The DID wallet obtains the login information by scanning the QR code of the target verifier and sends the login request to the target verifier. After receiving the login request and verifying the DID, the target verifier may first randomly generate a Nonce (Number Once, a random number value) and save the same, use the target user public key to encrypt the Nonce to obtain a cipherText and feed back the ciphertext to the DID wallet. Correspondingly, the DID wallet uses a target user private key PrivKey to decrypt the ciphertext, to obtain a plainText and feed back the plaintext to the target verifier. Therefore, the target verifier verifies a challenge-response result, determines the Nonce and the plaintext associated with the Nonce based on the loninID, and compares the Nonce with the plaintext. If the compare result is detected as consistent, then the target verifier polls to know that the challenge is successful, and that the target user successfully logs in is determined.

In the present embodiment, for the login mode that uses DID and claim to log in to the verifier, since the target claim of the target user is stored in its own identity hub, therefore, the DID wallet needs to authorize the target verifier to obtain the target claim of the target user from the identity hub of the target user after sending the login request to the target verifier, to verify the target claim.

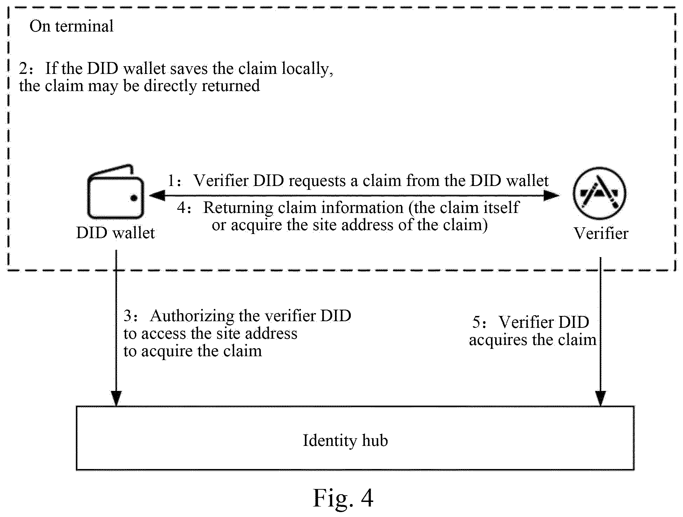

Particularly, Fig. 4 is an example diagram of authorizing a verifier to acquire a claim. As shown in Fig. 4, after receiving the login request, the target verifier sends a claim acquisition request to the DID wallet. If the DID wallet saves the claim locally, the claim may be directly returned to the target verifier. If the DID wallet does not save the claim locally, the DID wallet may acquire a target site address storing the target claim in the identity hub, and send the target site address storing the target claim in the identity hub to the target verifier, to instruct the target verifier to acquire the designated target claim without infringing the safety of other data information. Correspondingly, after obtaining the authorization from the DID wallet, the target verifier may access a target site of the identity hub based on the target site address, and obtain the target claim from the target site and verify the target claim. For example, verifying whether the target claim is issued by a trusted issuer, verifying whether the target claim is required for logining the target verifier, and verifying a revocation status of the target claim. The process details will be described in subsequent embodiments.

In order to achieve safe sharing of the target claim, the DID wallet may encrypt the target claim based on a proxy re-encryption mechanism before sending the target site address storing the target claim in the identity hub to the target verifier. Particularly, the DID wallet uses an AES (advanced encryption standard) key to encrypt the target claim to obtain a encrypted target claim, uses the target user public key to encrypt the AES key to obtain a symmetric key ciphertext, calculates to obtain a re-encryption key based on the target user private key and the target verifier public key acquired from the DID document associated with the target verifier DID. The encrypted target claim, the symmetric key ciphertext, and the re-encryption key are stored in the target site address of the identity hub. Furthermore, the identity hub uses the re-encryption key to re-encrypt the symmetric key ciphertext, to generate a re-encrypted ciphertext and store the same. Correspondingly, under the authorization of the target site address, the target verifier acquires the encrypted target claim and the re-encrypted ciphertext based on the target site address, and decrypts the re-encrypted ciphertext based on a target verifier private key to obtain a symmetric encryption key. The encrypted target claim is decrypted based on the symmetric encryption key to obtain the target claim.

In the present embodiment, for a user who does not own a claim may apply to the issuer. Correspondingly, the issuer may also revoke a claim issued by itself. Particularly, the DID wallet searches for a target issuer that issues the claim, based on service information of issuers in a claim issuer registry, and sends a claim application request to the target issuer, and obtains the target claim issued by the target issuer respond to the claim application request. When applying for the claim, the DID wallet may actively provide the target issuer with the target site address, which is for storing the target claim, in the identity hub, or the target issuer determines the target site address. Furthermore, after generating the target claim, the target issuer encrypts the target claim based on the proxy re-encryption mechanism, and stores the re-encrypted target claim in the target site address, and feeds the target site address back to the DID wallet. Correspondingly, the DID wallet accesses the target site in the identity hub based on the target site address, to obtain the re-encrypted target claim; and uses the target user private key to decrypt the re-encrypted target claim to obtain the target claim.

In the digital identity verification system of the present embodiment, each of the participants needs to verify each other's DID, i.e., digital identity, before interaction. Therefore, before accessing the target site in the identity hub based on the target site address, the DID wallet may send the target user DID to the identity hub. The identity hub acquires the DID document associated with the target user DID from the blockchain network, and uses the target user public key in the DID document to verify the user signature of the target user to verify whether the target user is the holder of the target user DID.

S230, logging in to the target verifier using the target user DID, in response to the target user DID and the target claim passing the verification.

In an embodiment of the present disclosure, the DID wallet or the target verifier may detect whether the target user DID and the target claim pass the verification based on a polling method. If the DID wallet detects that the target user DID and the target claim passes the verification, the target user DID is used to log in to the target verifier. If the target verifier detects that the target user DID and the target claim pass the verification, it is confirmed that the target user successfully logs in using the target user DID.

In the technical solution of the present embodiment, the user may operate the DID wallet, to acquire the target login information of the target verifier, so that the user may use the target user DID account to send the login request to the target verifier through the DID wallet, to authorize the target verifier to acquire the target claim of the target user from the identity hub of the target user; thus, based on the verification on the target user DID and the target claim by the target verifier, the target user DID is used to log in to the target verifier. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Second embodiment

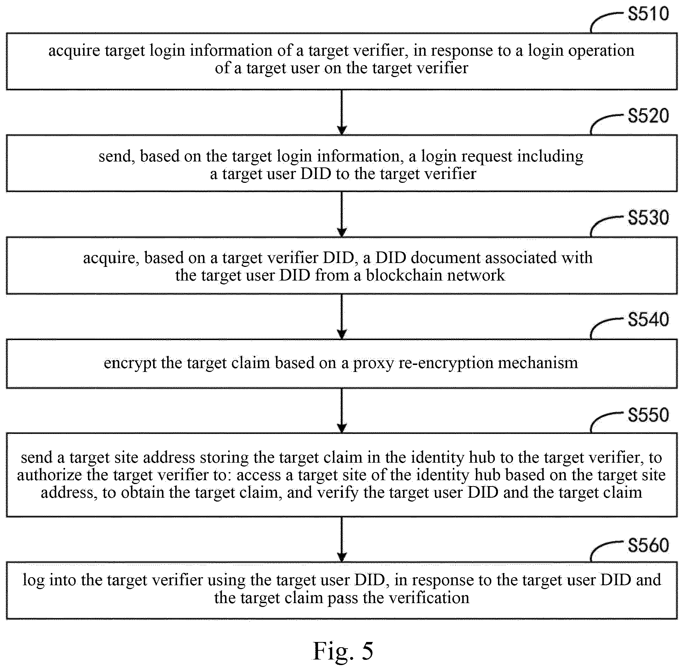

Fig. 5 is a flowchart of a method for verifying digital identity according to a second embodiment of the present disclosure. On the basis of the above first embodiment, the present embodiment further describes the process of the DID wallet authorizing the target verifier to acquire the designated claim. With the assistance of the blockchain network, the proxy re-encryption technology, and the identity hub, the target verifier is authorized. As shown in Fig. 5, the method specifically includes the following:

S510, acquiring target login information of a target verifier, in response to a login operation of a target user on the target verifier.

S520, sending, based on the target login information, a login request including a target user DID to the target verifier.

S530, acquiring, based on a target verifier DID, a DID document associated with the target user DID from a blockchain network.

In an embodiment of the present disclosure, the DID and DID document associated with the DID are stored in the blockchain network in the form of a key-value pair. After acquiring the target login information, the DID wallet may obtain the DID document associated with the target verifier DID from the blockchain network based on the target verifier DID, to acquire the target verifier public key from the DID document for encryption and use during data sharing.

S540, encrypting the target claim based on a proxy re-encryption mechanism.

In an embodiment of the present disclosure, the proxy re-encryption is a key conversion mechanism between ciphertexts. In proxy re-encryption, a semi-trusted proxy uses a conversion key generated by a proxy authorizer to convert the ciphertext encrypted with a public key of the authorizer into a ciphertext encrypted with a public key of an authorized person, realizing data sharing. In this process, the proxy cannot obtain plaintext information of the data, thereby reducing the risk of data leakage and improving the security of data sharing.

In the present embodiment, based on the proxy re-encryption mechanism, the DID wallet acquires the target verifier public key from the DID document associated with the target verifier DID based on the target user public key, and first encrypts the to-be-shared target claim.

Alternatively, the target claim is encrypted using an AES key to obtain an encrypted target claim; the AES key is encrypted using a target user public key to obtain a symmetric key ciphertext; a re-encryption key is obtained by calculating based on a target user private key and a target verifier public key acquired from the DID document associated with the target verifier DID; and the encrypted target claim, the symmetric key ciphertext, and the re-encryption key are stored to the target site address of the identity hub, to control the identity hub to use the re-encryption key to re-encrypt the symmetric key ciphertext, to generate a re-encrypted ciphertext and store the same.

In the present embodiment, the DID wallet sends the encrypted target claim and re-encrypted information generated by the encryption to the identity hub. The identity hub re-encrypts the encrypted target claim based on the re-encryption information, and saves the proxy re-encryption information in the target site address, for the target verifier to pull the re-encrypted claim from the identity hub, and obtain the target claim through decryption.

S550, sending a target site address storing the target claim in the identity hub to the target verifier, to authorize the target verifier to: access a target site of the identity hub based on the target site address, to obtain the target claim, and verify the target user DID and the target claim.

In an embodiment of the present disclosure, the target site address is used to authorize the target verifier to acquire the target claim. The sending of the target site address triggers the access to the target site of the identity hub based on the target site address, to obtain the proxy re-encrypted target claim. The encrypted target claim and the re-encrypted ciphertext are acquired based on the target site address, the re-encrypted ciphertext is decrypted based on the target verifier private key to obtain the symmetric encryption key, and the encrypted target claim is decrypted based on the symmetric encryption key to obtain the target claim.

In the present embodiment, after acquiring the target login information, the DID wallet may first acquire the target verifier public key and encrypts the target claim, and then synchronously sends the target site address to the target verifier for authorization when sending the login request to the target verifier. Or, after acquiring the target login information and sending the login request to the target verifier, the DID wallet may receive the claim acquisition request from the target verifier, and then DID wallet acquires the target verifier public key and encrypt the target claim, and return the target site address to the target verifier for authorization.

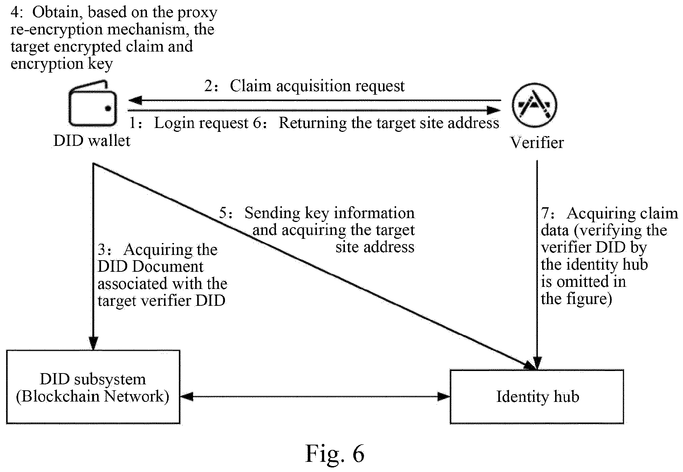

Exemplary, Fig. 6 is an example diagram of a verifier acquiring a claim. As shown in Fig. 6, after the DID wallet sends the login request to the target verifier, the target verifier sends the claim acquisition request to the DID wallet. Then, the DID wallet pulls the DID document of the target verifier based on the blockchain network, and obtains the target verifier public key therefrom. Therefore, the DID wallet encrypts the target claim based on the proxy re-encryption mechanism, and stores the re-encrypted target claim into the target site address of the identity hub. The target site address is returned to the target verifier to instruct the target verifier to acquire and decrypt to obtain the target claim from the identity hub.

S560, logging into the target verifier using the target user DID, in response to the target user DID and the target claim pass the verification.

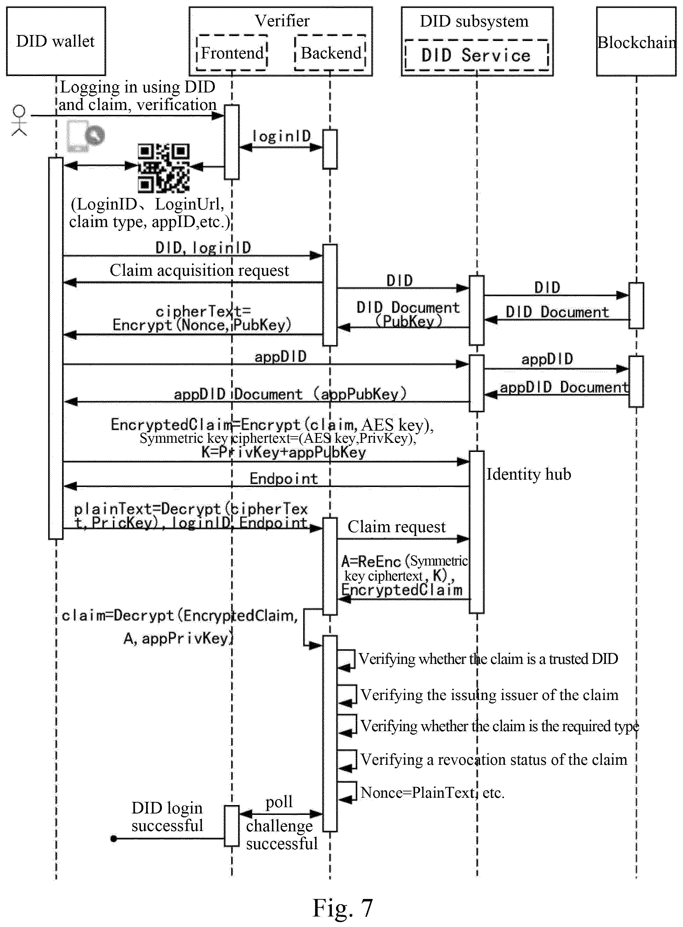

Exemplary, Fig. 7 is a flowchart of logging in to a verifier using DID and claim. As shown in Fig. 7, the DID wallet obtains the login information by scanning QR code of the target verifier, and sends a login request including the target user DID to the target verifier. After receiving the login request and verifying the target user DID, the target verifier sends the claim acquisition request to the DID wallet. Then, based on the proxy re-encryption mechanism, the DID wallet: acquires target verifier public key appPubKey through the DID document (appDID document) associated with the target verifier DID pulled from the blockchain network; calculates to obtain re-encryption key K based on the target user private key and the target verifier public key; uses the AES key to encrypt the claim to obtain the encrypted target claim; encrypts the AES key using the target user public key to obtain the symmetric key ciphertext; and sends the symmetric key ciphertext to the identity hub, so that the identity hub uses the re-encryption key K to encrypt the symmetric key ciphertext to obtain re-encrypted ciphertext A and feeds back stored site address Endpoint to the DID wallet. At the same time, the target verifier may first randomly generate a Nonce and save the same, encrypt the Nonce using the target user public key to obtain a ciphertext, and feed the ciphertext back to the DID wallet. Correspondingly, the DID wallet uses target user private key PrivKey to decrypt the ciphertext to obtain a plainText. The DID wallet sends the plaintext and the site address to the target verifier, to control the target verifier to: acquire the encrypted target claim and the re-encrypted ciphertext A based on the site address, and decrypt the re-encrypted ciphertext A based on target verifier private key appPrivKey to obtain the symmetric encryption key, and decrypt the encrypted target claim based on the symmetric encryption key to obtain the target claim. Further, the target verifier performs a series of verifications based on information such as the target user DID, the target claim, and the plaintext. If the verification is passed, the target verifier polls to know that the challenge is successful, and it is determined that the target user successfully logs in.

In the technical solution of the present embodiment, the user may operate the DID wallet to acquire the target login information of the target verifier, then send the login request to the target verifier, perform proxy re-encryption on the claim, and send a target site address to the target verifier to authorize the target verifier to acquire the proxy re-encrypted claim from the identity hub of the target user, thereby the target verifier is logged in by using the target user DID based on that the target verifier verifies the target user DID and the target claim. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Third embodiment

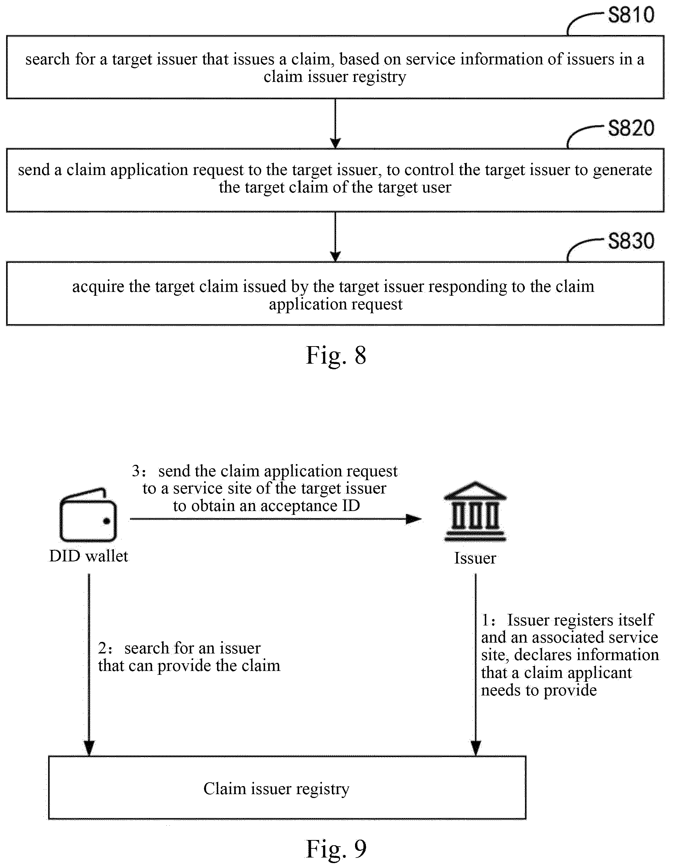

Fig. 8 is a flowchart of applying for a claim according to a third embodiment of the present disclosure. On the basis of the above first embodiment, the present embodiment further describes the process of the DID wallet applying for a claim to the issuer, and the claim can be obtained through issuance by the issuer. As shown in Fig. 8, the method specifically includes the following:

S810, searching for a target issuer that issues a claim, based on service information of issuers in a claim issuer registry.

In an embodiment of the present disclosure, issuers may register with the claim issuer registry in advance to configure the service information in the claim issuer registry for release. The service information may include service site information, applicable claim type, and material required from an applicant, etc. Correspondingly, before a DID wallet applies for a claim, the DID wallet may query in the claim issuer registry to find the target issuer capable of issuing the required claim.

S820, sending a claim application request to the target issuer, to control the target issuer to generate the target claim of the target user.

In an embodiment of the present disclosure, the claim application request may include a target user signature and a target user DID. After the target issuer receives the claim application request sent by the DID wallet, the target issuer may acquire the DID document associated with the target user DID from the blockchain based on the target user DID, and acquire the target user public key therefrom, and use the target user public key to verify the target user signature, to verify that the target user is indeed the holder of the target user DID; after the verification is passed, the target issuer generates the target claim for the target user.

Exemplary, Fig. 9 is a schematic diagram of applying for a claim. As shown in Fig. 9, the issuer registers itself and an associated service site with the claim issuer registry, and declares information that a claim applicant needs to provide. The DID wallet searches in the claim issuer registry for a target issuer capable of providing the claim, and sends the claim application request to the service site of the target issuer to obtain an acceptance ID, which is used to globally identify this application behavior of the target user.

S830, acquiring the target claim issued by the target issuer responding to the claim application request.

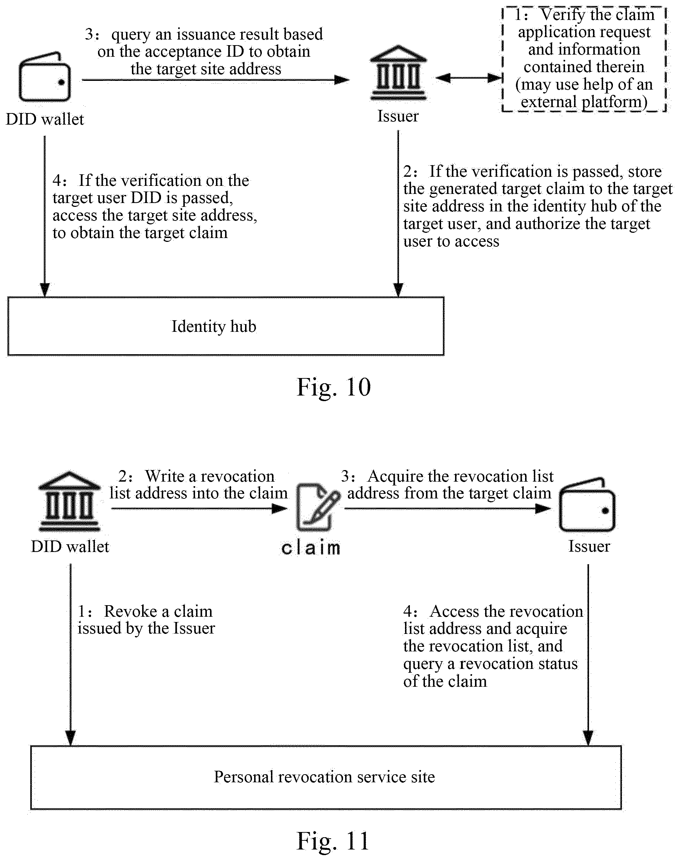

In an embodiment of the present disclosure, Fig. 10 is a schematic diagram of issuing a claim. As shown in Fig. 10, after accepting the claim application, the target issuer first verifies the claim application request and information contained therein. Particularly, in addition to verifying the signature of the target user, the target issuer may also verify the information contained in the request with the help of an external platform to verify whether the information is required by the present issuer and the correctness of the information. The external platform may be a bank or a public security bureau.

If the verification is passed, the target issuer stores the generated target claim to the target site address in the identity hub of the target user, and feeds back the target site address to the DID wallet to authorize the target user to access. The target site address may be provided by the target user, or may be designated later by the issuer, so that the target user may directly access the target claim.

Alternatively, receiving a target site address fed back by the target issuer responding to the claim application request; where, the target site address is located in the identity hub of the target user, for storing a target claim proxy re-encrypted by the target issuer; accessing, based on the target site address, a target site in the identity hub to obtain the proxy re-encrypted target claim; and decrypting the proxy re-encrypted target claim using a target user private key to obtain the target claim. For example, the DID wallet may query an result of the issuing with the target issuer based on the acceptance ID to obtain the target site address.

Alternatively, before the accessing, based on the target site address, the target site in the identity hub, the target user DID is sent to the identity hub for the identity hub to: acquire a DID document associated with the target user DID from a blockchain network and verify a user signature of the target user using a target user public key in the DID document to verify whether the target user is the holder of the target user DID. Finally, the DID wallet sends the target user DID to the identity hub for the identity hub to verify the target user DID. If the verification is passed, the DID wallet accesses the target site in the identity hub based on the target site address, to obtain the target claim issued by the target issuer.

Before the target issuer stores the generated target claim into the identity hub, the target issuer may also perform proxy re-encryption on the target claim based on the proxy re-encryption mechanism. Correspondingly, after obtaining the proxy re-encrypted target claim, the DID wallet decrypts the proxy re-encrypted target claim to obtain the target claim, ensuring the security of data sharing.

In addition, the issuer may revoke a claim issued by itself, and store claim revocation information in a revocation list, which is a public address that everyone may access, and the revocation list is saved in a personal revocation service site of the issuer. Particularly, Fig. 11 is a schematic diagram of revoking a claim. As shown in Fig. 11, the issuer may write a revocation list address into the corresponding claim. Accordingly, the DID wallet may acquire the revocation list address from the target claim; access the revocation list address and obtain the revocation list, from the personal revocation service site of the issuer that issues the target claim; and query a revocation status of the target claim based on the revocation list.

In the technical solution of the present embodiment, based on transaction requirements, the user may apply, through the DID wallet, to the corresponding issuer to obtain the claim, and obtain the claim through issuance by the issuer, so that the user may log in to the verifier through the claim.

### Fourth embodiment

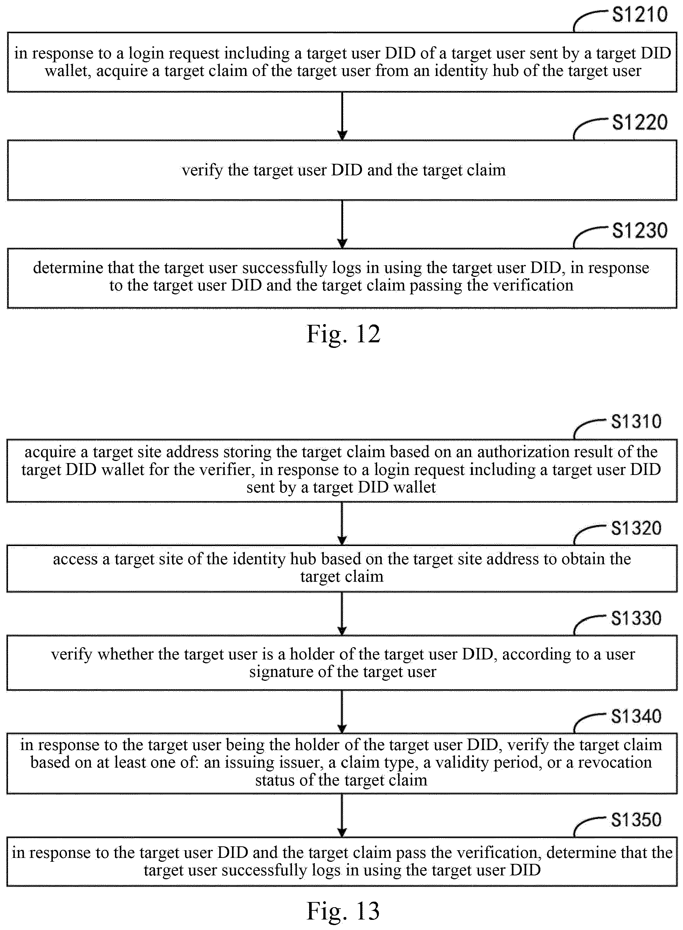

Fig. 12 is a flowchart of a method for verifying digital identity according to the scenario where the interaction with a verifier is through a DID wallet, based on the verification on DID and claim, the user logs in to the verifier using the DID. The method may be executed by the verifier and may be performed by an apparatus for verifying digital identity. The apparatus is implemented in software and/or hardware, and is preferably configured in an electronic device, such as a backend server of the verifier. As shown in Fig. 12, the method specifically includes the following:
S1210, in response to a login request including a target user decentralized identity, DID, of a target user sent by a target DID wallet, acquiring a target claim of the target user from an identity hub of the target user.

In an embodiment of the present disclosure, the login request is used to trigger the verifier to perform digital identity verification on the target user who is to log in. The login request may include information such as the target user DID, loginID, and/or user signature. The verifier may link a series of login behaviors of the target user based on the loginID, and may also acquire a DID document associated with the target user DID from a blockchain network based on the target user DID, to acquire a target user public key from the DID document and verify the user signature using the target user public key, to verify that the target user is the true holder of the target user DID, preventing digital identities from being leaked or forged.

In the present embodiment, since the target claim of the target user is stored in its own identity hub, the verifier may be authorized by the target decentralized identity DID wallet (target DID wallet) to obtain the target claim of the target user from the identity hub of the target user.

Particularly, acquiring a target site address storing the target claim, based on an authorization result of the target DID wallet for the verifier; and accessing a target site of the identity hub based on the target site address to obtain the target claim. A encrypted target claim and a re-encrypted ciphertext are encrypted and generated based on a proxy re-encryption mechanism. Therefore, the verifier may: access the target site of the identity hub based on the target site address to obtain the encrypted target claim and the re-encrypted ciphertext; decrypt the re-encrypted ciphertext using a verifier private key to obtain a symmetric encryption key; and decrypt the encrypted target claim using the symmetric encryption key to obtain the target claim.

S1220, verifying the target user DID and the target claim.

In an embodiment of the present disclosure, the verification on the target user DID is used to verify whether the current user is the true holder of the target user DID, to avoid theft or forgery of digital identities. The verification on the target claim is used to verify whether the current user has an authority, or whether it is authorized by a valid issuer verification, to log in to the verifier.

Particularly, whether the target user is the holder of the target user DID is verified according to the user signature of the target user. That is, acquiring a DID document associated with the target user DID from a blockchain network, based on the target user DID; and verifying the user signature of the target user, based on a target user public key in the DID document associated with the target user DID, to verify whether the target user is the holder of the target user DID. If the target user DID passes the verification, the target claim is verified based on at least one of: an issuing issuer, a claim type, a validity period, or a revocation status of the target claim.

S1230, determining that the target user successfully logs in using the target user DID, in response to the target user DID and the target claim passing the verification.

In the technical solution of the present embodiment, after receiving the login request sent by the target DID wallet, the verifier may acquire, based on the authorization of the target DID wallet, the target claim of the target user from the identity hub of the target user, and verify the target user DID and the target claim. After confirming that the verification is passed, it may be determined that the target user successfully logs in using the target user DID. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Fifth embodiment

Fig. 13 is a flowchart of a method for verifying digital identity according to a fifth embodiment of the present disclosure. On the basis of the above first embodiment, the present embodiment further describes the process of acquiring and verifying a claim, and can acquire the target claim based on the target site address provided by the target DID wallet and verify the acquired target claim. As shown in Fig. 13, the method specifically includes the following:

S1310, acquiring a target site address storing the target claim based on an authorization result of the target DID wallet for the verifier, in response to a login request including a target user DID sent by a target DID wallet.

In an embodiment of the present disclosure, after receiving a login request sent by the target DID wallet, the verifier may send a claim acquisition request to the target DID wallet to request the target DID wallet to authorize the acquiring of the target claim. If the target DID wallet feeds back the target site address, it may be regarded as being authorized by the target DID wallet. The target site address is located in an identity hub for storing the DID, claim and related information of the target user.

S1320, accessing a target site of the identity hub based on the target site address to obtain the target claim.

In an embodiment of the present disclosure, the verifier may access the target site of the identity hub based on the target site address to acquire the designated target claim from the target site. In view of the safety of data sharing, the target claim in the target site may be encrypted and obtained by the target DID wallet based on the re-encryption mechanism. Correspondingly, after acquired by the verifier, decryption is required to obtain the real target claim.

Alternatively, accessing the target site of the identity hub based on the target site address, to obtain a encrypted target claim and a re-encrypted ciphertext; where the encrypted target claim and the re-encrypted ciphertext are encrypted and generated based on a proxy re-encryption mechanism; decrypting the re-encrypted ciphertext using a verifier private key to obtain a symmetric encryption key; and decrypting the encrypted target claim using the symmetric encryption key to obtain the target claim.

S1330, verifying whether the target user is a holder of the target user DID, according to a user signature of the target user.

In an embodiment of the present disclosure, the login request may also include the user signature of the target user, so that the verifier verifies the target user DID. Alternatively, obtaining a DID document associated with the target user DID from a blockchain network, based on the target user DID; and verifying the user signature of the target user, based on a target user public key in the DID document associated with the target user DID, to verify whether the target user is the holder of the target user DID.

S1340, in response to the target user being the holder of the target user DID, verifying the target claim based on at least one of: an issuing issuer, a claim type, a validity period, or a revocation status of the target claim.

In an embodiment of the present disclosure, the relevant information, claim type, validity period and other information of the issuer which issues the target claim may be stored in the DID document. Correspondingly, the verifier may: acquire the issuer issuing the target claim to verify whether the issuer is a trusted issuer; verify whether the target claim is the claim required for logging in to the present verifier based on the claim type; verify whether the target claim is currently within a limited use period based on the validity period; may also acquire a revocation list address from the target claim, and access the revocation list address of a personal revocation service site of the issuer issuing the target claim to obtain a revocation list to query the revocation status of the target claim. It may be understood that only when all of the relevant information of the target claim passes the verification can it be determined that the target claim is verified.

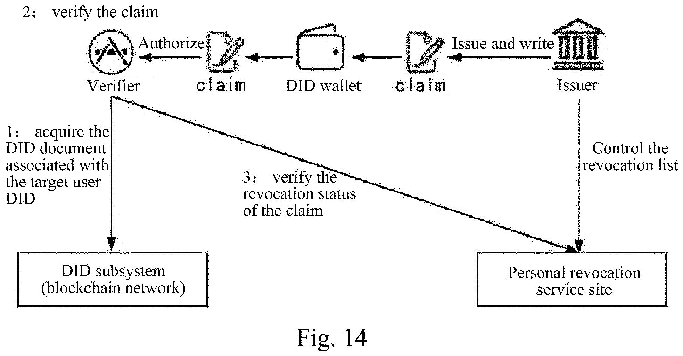

Exemplary, Fig. 14 is a schematic diagram of verifying a claim. As shown in Fig. 14, the issuer controls the issuance and revocation of the claim, and writes the revocation list address in the claim. After applying for and obtaining the claim, the DID wallet authorizes the verifier in the process of requesting to log in to the verifier, so that the verifier obtains the claim. Furthermore, the verifier obtains the DID document associated with the target user DID from the blockchain network based on the target user DID, and verifies the claim based on information in the DID document. At the same time, the verifier may also query the revocation status of the claim from the personal revocation service site of the issuer.

S1350, in response to the target user DID and the target claim pass the verification, determining that the target user successfully logs in using the target user DID.

In an embodiment of the present disclosure, if the authenticity verification on the target user DID is passed, the issuer issuing the target claim is a trusted organization, the target claim is the claim type required for login, and the target claim is within the validity period and has not been revoked, then it is determined that the target user DID and the target claim pass the verification, and it is further determined that the target user successfully logs in using the target user DID. The verification on the claim is not limited to the above example, and any verification method may be applied in the present embodiment.

In the technical solution of the present embodiment, after receiving the login request sent by the target DID wallet, the verifier may: acquire the target site address based on the authorization of the target DID wallet, acquire the target claim of the target user from the target site of the identity hub of the target user, verify the target user DID, and verify the target claim based on at least one of the issuer issuing the target claim, the claim type, the validity period, and the revocation status of the target claim. When the verification is passed, it may be determined that the target user successfully logs in using the target user DID. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Sixth embodiment

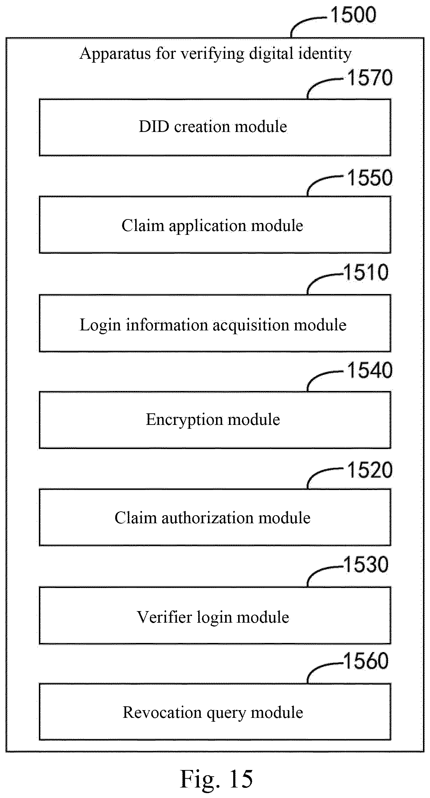

Fig. 15 is a schematic structural diagram of an apparatus for verifying digital identity according to a sixth embodiment of the present disclosure. The present embodiment is applicable to the scenario where the interaction with a verifier is through a DID wallet, based on the verification on DID and claim, the user logs in to the verifier using the DID. The apparatus may be configured in the DID wallet, and may implement the method for verifying digital identity described in any embodiment of the present disclosure. The apparatus 1500 specifically includes the following:
a login information acquisition module 1510, configured to acquire target login information of a target verifier, in response to a login operation of a target user on the target verifier;
a claim authorization module 1520, configured to send, based on the target login information, a login request including a target user DID of a target user to the target verifier, to authorize the target verifier to acquire a target claim of the target user from an identity hub of the target user and verify the target user DID and the target claim; and
a verifier login module 1530, configured to log in to the target verifier using the target user DID, in response to the target user DID and the target claim passing the verification.

Alternatively, the login information acquisition module 1510 is specifically configured to: acquire the target login information including at least a target verifier DID in response to the login operation of the target user on the target verifier, for acquiring, from a blockchain network, a DID document associated with the target verifier DID based on the target verifier DID.

Alternatively, the claim authorization module 1520 is specifically configured to: send a target site address storing the target claim in the identity hub to the target verifier, to authorize the target verifier to access a target site of the identity hub based on the target site address to acquire the target claim.

Further, the apparatus 1500 further includes an encryption module 1540, particularly configured to: before sending the target site address storing the target claim in the identity hub to the target verifier, encrypting the target claim based on a proxy re-encryption mechanism.

Alternatively, the encryption module 1540 is specifically configured to: encrypt the target claim using an advanced encryption standard, AES, key, to obtain an encrypted target claim; encrypt the AES key using a target user public key, to obtain a symmetric key ciphertext; calculate to obtain a re-encryption key, based on a target user private key, and a target verifier public key acquired from the DID document associated with the target verifier DID; and store the encrypted target claim, the symmetric key ciphertext, and the re-encryption key into the target site address of the identity hub, to control the identity hub to re-encrypt the symmetric key ciphertext using the re-encryption key to generate and store a re-encrypted ciphertext.

Alternatively, the target site address is used by the target verifier to: acquire the encrypted target claim and the re-encrypted ciphertext based on the target site address, and decrypt the re-encrypted ciphertext based on a target verifier private key to obtain a symmetric encryption key, and decrypt the encrypted target claim based on the symmetric encryption key to obtain the target claim.

Further, the apparatus 1500 further includes a claim application module 1550, configured to: before the acquiring the target login information of the target verifier, in response to the login operation of the target user on the target verifier, search for a target issuer that issues a claim, based on service information of issuers in a claim issuer registry; send a claim application request to the target issuer, to control the target issuer to generate the target claim of the target user; and obtain the target claim issued by the target issuer responding to the claim application request.

Alternatively, the claim application module 1550 is configured to: receive a target site address fed back by the target issuer responding to the claim application request, where, the target site address is located in the identity hub of the target user for storing a target claim proxy re-encrypted by the target issuer; access, based on the target site address, a target site in the identity hub to obtain the proxy re-encrypted target claim; and decrypt the proxy re-encrypted target claim using a target user private key to obtain the target claim.

Alternatively, the claim application module 1550 is specifically configured to: before the accessing, based on the target site address, the target site in the identity hub to obtain the proxy re-encrypted target claim, send the target user DID to the identity hub, for the identity hub to: acquire a DID document associated with the target user DID from a blockchain network, and verify a user signature of the target user using a target user public key in the DID document, to verify whether the target user is a holder of the target user DID.

Further, the apparatus 1500 further includes a revocation query module 1560, configured to: acquire a revocation list address from the target claim; access the revocation list address and obtain a revocation list, from a personal revocation service site of the issuer that issues the target claim; and query a revocation status of the target claim based on the revocation list.

Further, the apparatus 1500 further includes a DID creation module 1570, configured to: before the acquiring the target login information of the target verifier, in response to the login operation of the target user on the target verifier, create the target user DID and at least one public and private key pair for the target user, in response to a DID creation request of the target user.

The technical solution of the present embodiment realizes functions such as DID creation, claim application, login information acquisition, claim encryption and decryption, verifier authorization, verifier login and revocation status query, through the cooperation between various functional modules. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Seventh embodiment

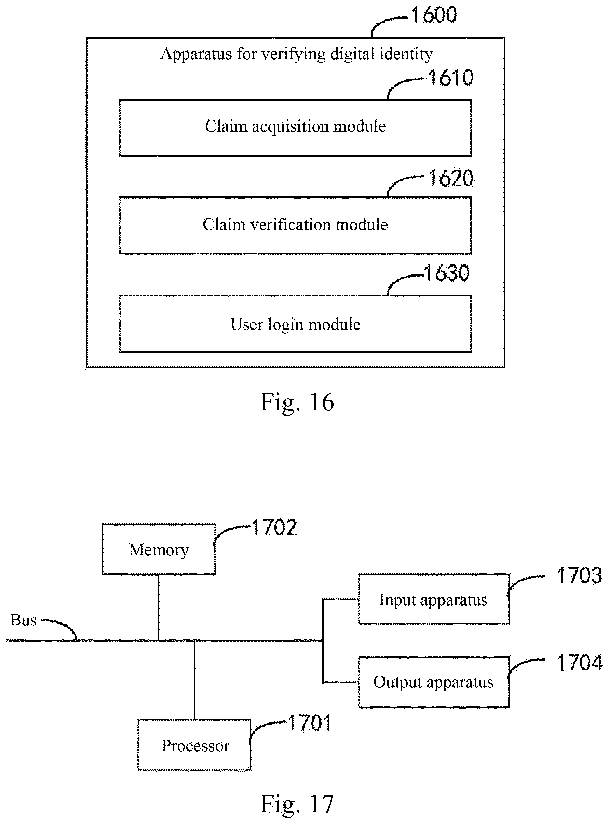

Fig. 16 is a schematic structural diagram of an apparatus for verifying digital identity according to a seventh embodiment of the present disclosure. The present embodiment is applicable to the scenario where the interaction with a verifier is through a DID wallet, based on the verification on DID and claim, the user logs in to the verifier using the DID. The apparatus may be configured in the verifier, and may implement the method for verifying digital identity described in any embodiment of the present disclosure. The apparatus 1600 specifically includes the following:

a claim acquisition module 1610, configured to acquire a target claim of the target user from an identity hub of the target user, in response to a login request including a target user decentralized identity, DID, of a target user sent by a target DID wallet;
a claim verification module 1620, configured to the target user DID and the target claim; and
a user login module 1630, configured to determine that the target user successfully logs in using the target user DID, in response to the target user DID and the target claim passing the verification.

Alternatively, the claim acquisition module 1610 is specifically configured to: acquire a target site address storing the target claim, based on an authorization result of the target DID wallet for the verifier; and access a target site of the identity hub based on the target site address to obtain the target claim.

Alternatively, the claim acquisition module 1610 is specifically configured to: access the target site of the identity hub based on the target site address, to obtain an encrypted target claim and a re-encrypted ciphertext, where the encrypted target claim and the re-encrypted ciphertext are encrypted and generated based on a proxy re-encryption mechanism; decrypt the re-encrypted ciphertext using a verifier private key, to obtain a symmetric encryption key; and decrypt the encrypted target claim using the symmetric encryption key, to obtain the target claim.

Alternatively, the claim verification module 1620 is specifically configured to: verify whether the target user is a holder of the target user DID, according to a user signature of the target user; in response to verifying that the target user is the holder of the target user DID, verify the target claim based on at least one of: an issuer issuing the target claim, a claim type, a validity period, or a revocation status of the target claim.

Alternatively, the claim verification module 1620 is specifically configured to: acquire a DID document associated with the target user DID from a blockchain network, based on the target user DID; and verify the user signature of the target user, based on a target user public key in the DID document associated with the target user DID, to verify whether the target user is the holder of the target user DID.

The technical solution of the present embodiment realizes functions such as claim acquisition, claim decryption, DID verification, claim verification, and user login, through the cooperation between various functional modules. Embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing users or enterprises with the DID wallet that uses and manages DID accounts, and ensuring an absolute ownership and control of digital identities.

### Eighth embodiment

According to an embodiment of the present disclosure, the present disclosure also provides an electronic device and a readable storage medium.

As shown in Fig. 17, which is a block diagram of an electronic device of a method for verifying digital identity according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 17, the electronic device includes: one or more processors 1701, a memory 1702, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system) . In Fig. 17, one processor 1701 is used as an example.

The memory 1702 is a non-transitory computer readable storage medium provided by the present disclosure. The memory stores instructions executable by at least one processor, so that the at least one processor performs the method for verifying digital identity provided by embodiments of the present disclosure. The non-transitory computer readable storage medium of the present disclosure stores computer instructions for causing a computer to perform the method for verifying digital identity provided by embodiments of the present disclosure.

The memory 1702, as a non-transitory computer readable storage medium, may be used to store non-transitory software programs, non-transitory computer executable programs and modules, such as program instructions/modules corresponding to the method for processing parking in embodiments of the present disclosure (for example, the login information acquisition module 1510, the claim authorization module 1520, and the verifier login module 1530, the encryption module 1540, the claim application module 1550, the revocation query module 1560, and the DID creation module 1570 shown in Fig. 15, and the claim acquisition module 1610, the claim verification module 1620, the user login module 1630 shown in Fig. 16) . The processor 1701 executes the non-transitory software programs, instructions, and modules stored in the memory 1702 to execute various functional applications and data processing of the server, that is, to implement the method for verifying digital identity in the foregoing method embodiment.

The memory 1702 may include a storage program area and a storage data area, where the storage program area may store an operating system and at least one function required application program; and the storage data area may store data created by the use of the electronic device according to the method for verifying digital identity, etc. In addition, the memory 1702 may include a high-speed random access memory, and may also include a non-transitory memory, such as at least one magnetic disk storage device, a flash memory device, or other non-transitory solid-state storage devices. In some embodiments, the memory 1702 may optionally include memories remotely provided with respect to the processor 1701, and these remote memories may be connected to the electronic device of the method for processing parking through a network. Examples of the above network include but are not limited to the Internet, intranet, local area network, mobile communication network, and combinations thereof.

The electronic device of the method for verifying digital identity may further include: an input apparatus 1703 and an output apparatus 1704. The processor 1701, the memory 1702, the input apparatus 1703, and the output apparatus 1704 may be connected through a bus or in other methods. In Fig. 17, connection through a bus is used as an example.

The input apparatus 1703 may receive input digital or character information, and generate key signal inputs related to user settings and function control of the electronic device of the method for verifying digital identity, such as touch screen, keypad, mouse, trackpad, touchpad, pointing stick, one or more mouse buttons, trackball, joystick and other input apparatuses. The output apparatus 1704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network) . Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution of embodiments of the present disclosure, by adding and defining architectures such as the DID wallet and the identity hub to a DID standard formulated by W3C, the working process and access method of the entire digital identity verification system is clarified based on the interaction between the DID wallet, the identity hub and other existing structures, and a complete digital identity verification system is realized, providing the users or enterprises with the DID wallet that uses and manages DID accounts, and ensuring an absolute ownership and control of digital identities.

In addition, the blockchain network may store DID and related information to provide information services for various participants. Correspondingly, the DID wallet may acquire the DID document associated with the target verifier DID through the blockchain network for data encryption and sharing.

In addition, the target site address is used to instruct the target verifier to acquire the designated claim from the identity hub, and then send the target site address to achieve the purpose of authorizing the target verifier, realizing the sharing of the claim.

In addition, the proxy re-encryption mechanism is used to realize the sharing of the claim, avoiding the leakage of the claim and ensuring data security.

In addition, the purpose of the proxy re-encryption mechanism lies in that the data encrypted based on the target user public key may be decrypted by a sharing party, i.e., the target verifier, using the target verifier private key to acquire the data, ensuring the safe sharing of the data.

In addition, the target site address is used to instruct the target verifier to acquire the designated claim. Correspondingly, under the protection of the proxy re-encryption mechanism, the target verifier is required to decrypt the acquired claim to ensure the safe sharing of the data.

In addition, based on business requirements, the user may apply to the corresponding issuer to obtain the claim through the DID wallet, so that the user may log in to the verifier through the claim.

In addition, since the issuance of a claim is also a data sharing process, the issuer may also use the proxy re-encryption technology when issuing a claim, to share the issued claim with the DID wallet.

In addition, during the interaction between participants, any participant may perform verification on DID digital identity on the other party based on the digital identity and related information stored in the blockchain network, based on the known DID of the other party, to determine that the other party is the true owner of the known DID, avoiding theft or forgery of digital identities by the party involved in the interaction, and ensuring the safety of the interaction.

In addition, the issuer may also revoke an issued claim. Correspondingly, other participants may query the revocation status of a claim using the revocation list address recorded in the claim to avoid using invalid claims.

In addition, the DID wallet provides the user with the DID creation service to provide the user with a globally unique digital identity.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

## Claims

1. A method for verifying digital identity, executed by a decentralized identity, DID, wallet configured in an electronic device, the method comprising:
acquiring (210, 510) target login information of a target verifier, in response to a login operation of a target user on the target verifier;
sending (220, 520), based on the target login information, a login request including a target user DID of a target user to the target verifier, to authorize the target verifier to acquire a target credential claim of the target user from an identity hub of the target user and verify the target user DID and the target credential claim; and
logging (230, 560) in to the target verifier using the target user DID, in response to the target user DID and the target credential claim passing the verification;
wherein authorizing the target verifier to acquire the target credential claim of the target user from the identity hub of the target user comprises sending (550) a target site address storing the target credential claim in the identity hub to the target verifier to authorize the target verifier to access a target site of the identity hub based on the target site address;
wherein, before sending (550) the target site address storing the target credential claim in the identity hub to the target verifier, the method further comprises: encrypting (540) the target credential claim based on a proxy re-encryption mechanism and storing the encrypted target credential claim into the target site address of the identity hub.

2. The method according to claim 1, wherein the acquiring (210) the target login information of the target verifier, in response to the login operation of the target user on the target verifier, comprises:
acquiring the target login information including at least a target verifier DID in response to the login operation of the target user on the target verifier, for acquiring, from a blockchain network, a DID document associated with the target verifier DID based on the target verifier DID.

3. The method according to claim 1, wherein the encrypting (540) the target credential claim based on the proxy re-encryption mechanism, comprises:
encrypting the target credential claim using an advanced encryption standard, AES, key, to obtain the encrypted target credential claim;
encrypting the AES key using a target user public key, to obtain a symmetric key ciphertext;
calculating to obtain a re-encryption key, based on a target user private key, and a target verifier public key acquired from a DID document associated with the target verifier DID; and
storing the symmetric key ciphertext, and the re-encryption key into the target site address of the identity hub, to control the identity hub to re-encrypt the symmetric key ciphertext using the re-encryption key to generate and store a re-encrypted ciphertext.

4. The method according to claim 3, wherein the target site address is used by the target verifier to:
acquire the encrypted target credential claim and the re-encrypted
ciphertext based on the target site address, and decrypt the re-encrypted ciphertext based on a target verifier private key to obtain a symmetric encryption key, and
decrypt the encrypted target credential claim based on the symmetric encryption key to obtain the target credential claim.

5. The method according to claim 1, wherein, before the acquiring (210) the target login information of the target verifier, in response to the login operation of the target user on the target verifier, the method further comprises:
searching (810) for a target issuer that issues a credential claim, based on service information of issuers in a credential claim issuer registry;
sending (820) a credential claim application request to the target issuer, to control the target issuer to generate the target credential claim of the target user; and
obtaining (830) the target credential claim issued by the target issuer responding to the credential claim application request.

6. The method according to claim 5, wherein the obtaining the target credential claim issued by the target issuer responding to the credential claim application request, comprises:
receiving a target site address fed back by the target issuer responding to the credential claim application request; wherein, the target site address is located in the identity hub of the target user for storing a target credential claim proxy re-encrypted by the target issuer;
accessing, based on the target site address, a target site in the identity hub to obtain the proxy re-encrypted target credential claim; and decrypting the proxy re-encrypted target credential claim using a target user private key to obtain the target credential claim.

7. The method according to claim 6, wherein, before the accessing, based on the target site address, the target site in the identity hub to obtain the proxy re-encrypted target credential claim, the method further comprises:
sending the target user DID to the identity hub, for the identity hub to: acquire a DID document associated with the target user DID from a blockchain network, and verify a user signature of the target user using a target user public key in the DID document, to verify whether the target user is a holder of the target user DID.

8. The method according to claim 5, wherein, after the obtaining the target credential claim issued by the target issuer responding to the credential claim application request, the method further comprises:
acquiring a revocation list address from the target credential claim;
accessing the revocation list address and obtaining a revocation list, from a personal revocation service site of the issuer that issues the target credential claim; and
querying a revocation status of the target credential claim based on the revocation list.

9. The method according to claim 1, wherein, before the acquiring the target login information of the target verifier, in response to the login operation of the target user on the target verifier, the method further comprises:
creating the target user DID and at least one public and private key pair for the target user, in response to a DID creation request of the target user.

10. A method for verifying digital identity, executed by a verifier configured in an electronic device, the method comprising:
in response to a login request including a target user decentralized identity, DID, of a target user sent by a target DID wallet, acquiring (1210) a target credential claim of the target user from an identity hub of the target user;
verifying (1220) the target user DID and the target credential claim; and
determining (1230) that the target user successfully logs in using the target user DID, in response to the target user DID and the target credential claim passing the verification;
wherein the acquiring (1210) the target credential claim of the target user from the identity hub of the target user, comprises:
acquiring (1310) a target site address storing the target credential claim, based on an authorization result of the target DID wallet for the verifier; and
accessing (1320) a target site of the identity hub based on the target site address to obtain the target credential claim,
wherein the accessing (1320) the target site of the identity hub based on the target site address to obtain the target credential claim, comprises:
accessing the target site of the identity hub based on the target site address, to obtain an encrypted target credential claim and a re-encrypted ciphertext; wherein the encrypted target credential claim and the re-encrypted ciphertext are encrypted and generated based on a proxy re-encryption mechanism;
decrypting the re-encrypted ciphertext using a verifier private key, to obtain a symmetric encryption key; and
decrypting the encrypted target credential claim using the symmetric encryption key, to obtain the target credential claim.

11. The method according to claim 10, wherein the verifying (1220) the target user DID and the target credential claim, comprises:
verifying (1330) whether the target user is a holder of the target user DID, according to a user signature of the target user, wherein the user signature is included in the login request; and
in response to verifying that the target user is the holder of the target user DID, verifying (1340) the target credential claim based on at least one of: an issuer issuing the target credential claim, a credential claim type, a validity period, or a revocation status of the target credential claim.

12. The method according to claim 11, wherein the verifying (1330) whether the target user is the holder of the target user DID, according to the user signature of the target user, comprises:
acquiring a DID document associated with the target user DID from a blockchain network, based on the target user DID; and
verifying the user signature of the target user, based on a target user public key in the DID document associated with the target user DID, to verify whether the target user is the holder of the target user DID.

13. An electronic device, comprising:
at least one processor; and
a memory, communicatively connected to the at least one processor; wherein,
the memory, storing instructions executable by the at least one processor, the instructions, when executed by the at least one processor, cause the at least one processor to perform the method for verifying digital identity according to any one of claims 1-9, or to perform the method for verifying digital identity according to any one of claims 10-12.

14. A non-transitory computer readable storage medium, storing computer instructions, the computer instructions, being used to cause the computer to perform the method for verifying digital identity according to any one of claims 1-9, or to perform the method for verifying digital identity according to any one of claims 10-12.

## Patentansprüche

1. Verfahren zum Verifizieren einer digitalen Identität, das von einer Wallet einer dezentralisierten Identität (DID), die in einer elektronischen Vorrichtung konfiguriert ist, ausgeführt wird, wobei das Verfahren Folgendes umfasst:
Erfassen (210, 510) von Ziel-Login-Informationen eines Zielprüfers als Antwort auf einen Login-Vorgang eines Zielbenutzers auf dem Zielprüfer;
Senden (220, 520) einer Login-Anfrage auf Basis der Ziel-Login-Informationen, die eine Zielbenutzer-DID eines Zielbenutzers umfasst, an den Zielprüfer, um den Zielprüfer dazu zu autorisieren, eine Zielberechtigungsnachweisbeanspruchung des Zielbenutzers von einem Identität-Hub des Zielbenutzers zu erhalten und die Zielbenutzer-DID und die Zielberechtigungsnachweisbeanspruchung zu verifizieren; und
Einloggen (230, 560) in den Zielprüfer unter Verwendung der Zielbenutzer-DID als Antwort darauf, dass die Zielbenutzer-DID und die Zielberechtigungsnachweisbeanspruchung die Verifizierung bestanden haben;
wobei das Autorisieren des Zielprüfers zum Erfassen der Zielberechtigungsnachweisbeanspruchung von dem Zielbenutzer von dem Identität-Hub des Zielbenutzers das Senden (550) einer Zielseitenadresse, an der die Zielberechtigungsnachweisbeanspruchung in dem Identität-Hub gespeichert wird, an den Zielprüfer umfasst, um den Zielprüfer dazu zu autorisieren, auf eine Zielseite des Identität-Hub basierend auf der Zielseitenadresse zuzugreifen;
wobei das Verfahren vor dem Senden (550) der Zielseitenadresse, an der die Zielberechtigungsnachweisbeanspruchung in dem Identität-Hub gespeichert ist, an den Zielprüfer außerdem Folgendes umfasst:
Verschlüsseln (540) der Zielberechtigungsnachweisbeanspruchung basierend auf einem Proxy-Wiederverschlüsselungsmechanismus und Speichern der verschlüsselten Zielberechtigungsnachweisbeanspruchung an der Zielseitenadresse des Identität-Hub.

2. Verfahren nach Anspruch 1, wobei das Erfassen (210) der Ziel-Login-Informationen des Zielprüfers als Antwort auf den Login-Vorgang des Zielbenutzers auf dem Zielprüfer Folgendes umfasst:
Erfassen der Ziel-Login-Informationen umfassend zumindest eine Zielprüfer-DID als Antwort auf den Login-Vorgang des Zielbenutzers auf dem Zielprüfer, um ein DID-Dokument, das der Zielprüfer-DID zugeordnet ist, basierend auf der Zielprüfer-DID von einem Blockchain-Netzwerk zu erfassen.

3. Verfahren nach Anspruch 1, wobei das Verschlüsseln (540) der Zielberechtigungsnachweisbeanspruchung basierend auf dem Proxy-Wiederverschlüsselungsmechanismus Folgendes umfasst:
Verschlüsseln der Zielberechtigungsnachweisbeanspruchung unter Verwendung eines Schlüssels eines hochentwickelten Verschlüsselungsstandards (AES), um die verschlüsselte Zielberechtigungsnachweisbeanspruchung zu erhalten;
Verschlüsseln des AES-Schlüssels unter Verwendung eines öffentlichen Zielbenutzerschlüssels, um einen Ciphertext mit symmetrischem Schlüssel zu erhalten;
Rechnen, um einen Wiederverschlüsselungsschlüssel basierend auf einem privaten Zielbenutzerschlüssel und einem öffentlichen Zielprüferschlüssel zu erhalten, der von einem der Zielprüfer-DID zugeordneten DID-Dokument erfasst wurde; und
Speichern des Ciphertexts mit symmetrischem Schlüssel und des Wiederverschlüsselungsschlüssels an der Zielseitenadresse des Identität-Hub, um den Identität-Hub zu steuern, um den Ciphertext mit symmetrischem Schlüssel unter Verwendung des Wiederverschlüsselungsschlüssels erneut zu verschlüsseln, um einen wiederverschlüsselten Ciphertext zu erzeugen und zu speichern.

4. Verfahren nach Anspruch 3, wobei die Zielseitenadresse von dem Zielprüfer verwendet wird, um die verschlüsselte Zielberechtigungsnachweisbeanspruchung und den wiederverschlüsselten Ciphertext basierend auf der Zielseitenadresse zu erfassen und den wiederverschlüsselten Ciphertext basierend auf einem privaten Zielprüferschlüssel zu entschlüsseln, um einen symmetrischen Verschlüsselungsschlüssel zu erhalten, und die verschlüsselte Zielberechtigungsnachweisbeanspruchung basierend auf dem symmetrischen Verschlüsselungsschlüssel zu entschlüsseln, um die Zielberechtigungsnachweisbeanspruchung zu erhalten.

5. Verfahren nach Anspruch 1, wobei vor dem Erfassen (210) der Ziel-Login-Informationen des Zielprüfers das Verfahren als Antwort auf den Login-Vorgang des Zielbenutzers auf dem Zielprüfer außerdem Folgendes umfasst:
Suchen (810) eines Zielausstellers, der basierend auf Serviceinformationen von Ausstellern in einer Berechtigungsnachweisbeanspruchung-Aussteller-Registrierungsdatenbank eine Berechtigungsnachweisbeanspruchung ausstellt;
Senden (820) einer Berechtigungsnachweisbeanspruchung-Anwendungsanfrage an den Zielaussteller, um den Zielaussteller zu steuern, um die Zielberechtigungsnachweisbeanspruchung des Zielbenutzers zu erzeugen; und
Erhalten (830) der von dem Zielaussteller ausgestellten Zielberechtigungsnachweisbeanspruchung als Antwort auf die Berechtigungsnachweisbeanspruchung-Anwendungsanfrage.

6. Verfahren nach Anspruch 5, wobei das Erhalten der von dem Zielaussteller ausgestellten Zielberechtigungsnachweisbeanspruchung als Antwort auf die Berechtigungsnachweisbeanspruchung-Anwendungsanfrage Folgendes umfasst:
Empfangen einer Zielseitenadresse, die von dem Zielaussteller als Antwort auf die Berechtigungsnachweisbeanspruchung-Anwendungsanfrage zurückgemeldet wird; wobei sich die Zielseitenadresse im Identität-Hub des Zielbenutzers zum Speichern einer Zielberechtigungsnachweisbeanspruchung befindet, der von dem Zielaussteller mittels Proxy wiederverschlüsselt wurde;
Zugreifen auf eine Zielseite in dem Identität-Hub auf Basis der Zielseitenadresse, um die mittels Proxy wiederverschlüsselte Zielberechtigungsnachweisbeanspruchung zu erhalten; und
Entschlüsseln der mittels Proxy wiederverschlüsselten Zielberechtigungsnachweisbeanspruchung unter Verwendung eines privaten Zielbenutzerschlüssels, um die Zielberechtigungsnachweisbeanspruchung zu erhalten.

7. Verfahren nach Anspruch 6, wobei das Verfahren vor dem Zugreifen auf die Zielseite in dem Identität-Hub auf Basis der Zielseitenadresse, um die mittels Proxy wiederverschlüsselte Zielberechtigungsnachweisbeanspruchung zu erhalten, Folgendes umfasst:
Senden der Zielbenutzer-DID an den Identität-Hub, damit der Identität-Hub ein DID-Dokument, das der Zielbenutzer-DID zugeordnet ist, von einem Blockchain-Netzwerk erfasst und eine Benutzersignatur des Zielbenutzers unter Verwendung eines öffentlichen Zielbenutzerschlüssels in dem DID-Dokument verifiziert, um zu verifizieren, ob der Zielbenutzer Inhaber der Zielbenutzer-DID ist.

8. Verfahren nach Anspruch 5, wobei das Verfahren nach dem Erhalten der von dem Zielaussteller ausgestellten Zielberechtigungsnachweisbeanspruchung als Antwort auf die Berechtigungsnachweisbeanspruchung-Anwendungsanfrage außerdem Folgendes umfasst:
Erfassen einer Widerrufslistenadresse von der Zielberechtigungsnachweisbeanspruchung;
Zugreifen auf die Widerrufslistenadresse und Erhalten einer Widerrufsliste von einer persönlichen Widerrufsdienstseite des Ausstellers, der die Zielberechtigungsnachweisbeanspruchung ausstellt; und
Abfragen eines Widerrufsstatus der Zielberechtigungsnachweisbeanspruchung basierend auf der Widerrufsliste.

9. Verfahren nach Anspruch 1, wobei das Verfahren vor dem Erfassen der Ziel-Login-Informationen des Zielprüfers als Antwort auf den Login-Vorgang des Zielbenutzers auf dem Zielprüfer außerdem Folgendes umfasst:
Erzeugen der Zielbenutzer-DID und zumindest ein Paar aus öffentlichem und privatem Schlüssel für den Zielbenutzer als Antwort auf eine DID-Erzeugungsanfrage des Zielbenutzers.

10. Verfahren zum Verifizieren einer digitalen Identität, das von einem in einer elektronischen Vorrichtung konfigurierten Prüfer ausgeführt wird, wobei das Verfahren Folgendes umfasst:
als Antwort auf eine Login-Anfrage, die eine dezentralisierte Identität (DID) eines Zielbenutzers umfasst, eines Zielbenutzers, die von einer Ziel-DID-Wallet gesendet wurde, Erfassen (1210) einer Zielberechtigungsnachweisbeanspruchung des Zielbenutzers von einem Identität-Hub des Zielbenutzers;
Verifizieren (1220) der Zielbenutzer-DID und der Zielberechtigungsnachweisbeanspruchung; und
Bestimmen (1230), dass sich der Zielbenutzer erfolgreich unter Verwendung der Zielbenutzer-DID einloggt, als Antwort darauf, dass die Zielbenutzer-DID und die Zielberechtigungsnachweisbeanspruchung die Verifizierung bestanden haben;
wobei das Erfassen (1210) der Zielberechtigungsnachweisbeanspruchung des Zielbenutzers vom Identität-Hub des Zielbenutzers Folgendes umfasst:
Erfassen (1310) einer Zielseitenadresse, an der die Zielberechtigungsnachweisbeanspruchung gespeichert ist, basierend auf einem Autorisierungsergebnis der Ziel-DID-Wallet für den Prüfer; und
Zugreifen (1320) auf eine Zielseite des Identität-Hub basierend auf der Zielseitenadresse, um die Zielberechtigungsnachweisbeanspruchung zu erhalten,
wobei das Zugreifen (1320) auf die Zielseite des Identität-Hub basierend auf der Zielseitenadresse, um die Zielberechtigungsnachweisbeanspruchung zu erhalten, Folgendes umfasst:
Zugreifen auf die Zielseite des Identität-Hub basierend auf der Zielseitenadresse, um eine verschlüsselte Zielberechtigungsnachweisbeanspruchung und einen wiederverschlüsselten Ciphertext zu erhalten; wobei die verschlüsselte Zielberechtigungsnachweisbeanspruchung und der wiederverschlüsselte Ciphertext basierend auf einem Proxy-Wiederverschlüsselungsmechanismus verschlüsselt und erzeugt werden;
Entschlüsseln des wiederverschlüsselten Ciphertexts unter Verwendung eines privaten Prüfschlüssels, um einen symmetrischen Verschlüsselungsschlüssel zu erhalten; und
Entschlüsseln der verschlüsselten Zielberechtigungsnachweisbeanspruchung unter Verwendung des symmetrischen Verschlüsselungsschlüssels, um die Zielberechtigungsnachweisbeanspruchung zu erhalten.

11. Verfahren nach Anspruch 10, wobei das Verifizieren (1220) der Zielbenutzer-DID und der Zielberechtigungsnachweisbeanspruchung Folgendes umfasst:
Verifizieren (1330), ob der Zielbenutzer Inhaber der Zielbenutzer-DID gemäß einer Benutzersignatur des Zielbenutzers ist, wobei die Benutzersignatur in der Login-Anfrage umfasst ist; und
als Antwort auf das Verifizieren, dass der Zielbenutzer Inhaber der Zielbenutzer-DID ist, Verifizieren (1340) der Zielberechtigungsnachweisbeanspruchung basierend auf zumindest einem des Folgenden: einem Aussteller, der die Zielberechtigungsnachweisbeanspruchung ausstellt, einem Berechtigungsnachweisbeanspruchungstyp, einer Gültigkeitsdauer oder eines Widerrufsstatus der Zielberechtigungsnachweisbeanspruchung.

12. Verfahren nach Anspruch 11, wobei das Verifizieren (1330), ob der Zielbenutzer Inhaber der Zielbenutzer-DID gemäß der Benutzersignatur des Zielbenutzers ist, Folgendes umfasst:
Erfassen eines DID-Dokuments, das der Zielbenutzer-DID zugeordnet ist, von einem Blockchain-Netzwerk auf Basis der Zielbenutzer-DID; und
Verifizieren der Benutzersignatur des Zielbenutzers basierend auf einem öffentlichen Zielbenutzerschlüssel in dem DID-Dokument, das der Zielbenutzer-DID zugeordnet ist, um zu verifizieren, ob der Zielbenutzer Inhaber der Zielbenutzer-DID ist.

13. Elektronische Vorrichtung, die Folgendes umfasst:
zumindest einen Prozessor; und
einen Speicher, der mit dem zumindest einen Prozessor kommunikativ gekoppelt ist; wobei der Speicher von dem zumindest einen Prozessor ausführbare Befehle speichert, wobei die Befehle bei der Ausführung durch den zumindest einen Prozessor den zumindest einen Prozessor dazu veranlassen, ein Verfahren zum Verifizieren einer digitalen Identität nach einem der Ansprüche 1 bis 9 oder ein Verfahren zum Verifizieren einer digitalen Identität nach einem der Ansprüche 10 bis 12 durchzuführen.

14. Nicht transitorisches computerlesbares Speichermedium, das Computerbefehle speichert, wobei die Computerbefehle verwendet werden, um den Computer dazu zu veranlassen, ein Verfahren zum Verifizieren einer digitalen Identität nach einem der Ansprüche 1 bis 9 oder ein Verfahren zum Verifizieren einer digitalen Identität nach einem der Ansprüche 10 bis 12 durchzuführen.

## Revendications

1. Procédé de vérification d'identité numérique, exécuté par un portefeuille d'identité décentralisée, DID, configuré dans un dispositif électronique, le procédé comprenant les étapes ci-dessous consistant à :
acquérir (210, 510) des informations de connexion cible d'un vérificateur cible, en réponse à une opération de connexion d'un utilisateur cible sur le vérificateur cible ;
envoyer (220, 520), sur la base des informations de connexion cible, une demande de connexion incluant une identité DID d'utilisateur cible d'un utilisateur cible au vérificateur cible, pour autoriser le vérificateur cible à acquérir une réclamation de justificatif d'identité cible de l'utilisateur cible à partir d'un centre d'identité de l'utilisateur cible et à vérifier l'identité DID d'utilisateur cible et la réclamation de justificatif d'identité cible ; et
se connecter (230, 560) au vérificateur cible au moyen de l'identité DID d'utilisateur cible, en réponse au fait que l'identité DID d'utilisateur cible et la réclamation de justificatif d'identité cible ont réussi la vérification ;
dans lequel l'étape consistant à autoriser le vérificateur cible à acquérir la réclamation de justificatif d'identité cible de l'utilisateur cible à partir du centre d'identité de l'utilisateur cible comprend l'étape consistant à envoyer (550) une adresse de site cible stockant la réclamation de justificatif d'identité cible dans le centre d'identité, au vérificateur cible, pour autoriser le vérificateur cible à accéder à un site cible du centre d'identité sur la base de l'adresse de site cible ;
dans lequel, avant l'étape d'envoi (550) de l'adresse de site cible stockant la réclamation de justificatif d'identité cible dans le centre d'identité, au vérificateur cible, le procédé comprend en outre l'étape consistant à :
chiffrer (540) la réclamation de justificatif d'identité cible sur la base d'un mécanisme de rechiffrement par mandataire et stocker la réclamation de justificatif d'identité cible chiffrée dans l'adresse de site cible du centre d'identité.

2. Procédé selon la revendication 1, dans lequel l'étape d'acquisition (210) des informations de connexion cible du vérificateur cible, en réponse à l'opération de connexion de l'utilisateur cible sur le vérificateur cible, consiste à :
acquérir les informations de connexion cible incluant au moins une identité DID de vérificateur cible en réponse à l'opération de connexion de l'utilisateur cible sur le vérificateur cible, pour acquérir, à partir d'un réseau de chaîne de blocs, un document d'identité DID associé à l'identité DID de vérificateur cible sur la base de l'identité DID de vérificateur cible.

3. Procédé selon la revendication 1, dans lequel l'étape de chiffrement (540) de la réclamation de justificatif d'identité cible sur la base du mécanisme de rechiffrement par mandataire, comprend les étapes ci-dessous consistant à :
chiffrer la réclamation de justificatif d'identité cible au moyen d'une clé de norme de chiffrement avancé (AES), afin d'obtenir la réclamation de justificatif d'identité cible chiffrée ;
chiffrer la clé AES au moyen d'une clé publique d'utilisateur cible, afin d'obtenir un cryptogramme de clé symétrique ;
mettre en oeuvre un calcul pour obtenir une clé de rechiffrement, sur la base d'une clé privée d'utilisateur cible, et d'une clé publique de vérificateur cible acquise à partir d'un document d'identité DID associé à l'identité DID de vérificateur cible ; et
stocker le cryptogramme de clé symétrique et la clé de rechiffrement dans l'adresse de site cible du centre d'identité, afin de commander au centre d'identité de rechiffrer le cryptogramme de clé symétrique au moyen de la clé de rechiffrement pour générer et stocker un cryptogramme rechiffré.

4. Procédé selon la revendication 3, dans lequel l'adresse de site cible est utilisée par le vérificateur cible pour :
acquérir la réclamation de justificatif d'identité cible chiffrée et le cryptogramme rechiffré sur la base de l'adresse de site cible, et déchiffrer le cryptogramme rechiffré sur la base d'une clé privée de vérificateur cible pour obtenir une clé de chiffrement symétrique, et déchiffrer la réclamation de justificatif d'identité cible chiffrée sur la base de la clé de chiffrement symétrique pour obtenir la réclamation de justificatif d'identité cible.

5. Procédé selon la revendication 1, dans lequel, avant l'étape d'acquisition (210) des informations de connexion cible du vérificateur cible, en réponse à l'opération de connexion de l'utilisateur cible sur le vérificateur cible, le procédé comprend en outre les étapes ci-dessous consistant à :
rechercher (810) un émetteur cible qui émet une réclamation de justificatif d'identité cible, sur la base d'informations de service d'émetteurs dans un registre d'émetteurs de réclamation de justificatif d'identité cible ;
envoyer (820) une demande d'application de réclamation de justificatif d'identité à l'émetteur cible, pour commander à l'émetteur cible de générer la réclamation de justificatif d'identité cible de l'utilisateur cible ; et
obtenir (830) la réclamation de justificatif d'identité cible émise par l'émetteur cible en réponse à la demande d'application de réclamation de justificatif d'identité.

6. Procédé selon la revendication 5, dans lequel l'étape d'obtention de la réclamation de justificatif d'identité cible émise par l'émetteur cible en réponse à la demande d'application de réclamation de justificatif d'identité, comprend les étapes ci-dessous consistant à :
recevoir une adresse de site cible renvoyée par l'émetteur cible en réponse à la demande d'application de réclamation de justificatif d'identité ; dans laquelle l'adresse de site cible est située dans le centre d'identité de l'utilisateur cible pour stocker une réclamation de justificatif d'identité cible rechiffrée par mandataire par l'émetteur cible ;
accéder, sur la base de l'adresse de site cible, à un site cible dans le centre d'identité pour obtenir la réclamation de justificatif d'identité cible rechiffrée par mandataire ; et
déchiffrer la réclamation de justificatif d'identité cible rechiffrée par mandataire au moyen d'une clé privée d'utilisateur cible pour obtenir la réclamation de justificatif d'identité cible.

7. Procédé selon la revendication 6, dans lequel, avant l'étape d'accès, sur la base de l'adresse de site cible, au site cible dans le centre d'identité pour obtenir la réclamation de justificatif d'identité cible rechiffrée par mandataire, le procédé comprend en outre l'étape ci-dessous consistant à :
envoyer l'identité DID d'utilisateur cible au centre d'identité, afin que le centre d'identité : acquière un document d'identité DID associé à l'identité DID d'utilisateur cible à partir d'un réseau de chaîne de blocs, et vérifie une signature d'utilisateur de l'utilisateur cible au moyen d'une clé publique d'utilisateur cible dans le document d'identité DID, afin de vérifier si l'utilisateur cible est un détenteur de l'identité DID d'utilisateur cible.

8. Procédé selon la revendication 5, dans lequel, après l'étape d'obtention de la réclamation de justificatif d'identité cible émise par l'émetteur cible en réponse à la demande d'application de réclamation de justificatif d'identité, le procédé comprend en outre les étapes ci-dessous consistant à :
acquérir une adresse de liste de révocation à partir de la réclamation de justificatif d'identité cible ;
accéder à l'adresse de liste de révocation et obtenir une liste de révocation, à partir d'un site de service de révocation personnel de l'émetteur qui émet la réclamation de justificatif d'identité cible ; et
interroger un état de révocation de la réclamation de justificatif d'identité cible sur la base de la liste de révocation.

9. Procédé selon la revendication 1, dans lequel, avant l'étape d'acquisition des informations de connexion cible du vérificateur cible, en réponse à l'opération de connexion de l'utilisateur cible sur le vérificateur cible, le procédé comprend en outre l'étape ci-dessous consistant à :
créer l'identité DID d'utilisateur cible et au moins une paire de clés publique et privée pour l'utilisateur cible, en réponse à une demande de création d'identité DID de l'utilisateur cible.

10. Procédé de vérification d'identité numérique, exécuté par un vérificateur configuré dans un dispositif électronique, le procédé comprenant les étapes ci-dessous consistant à :
en réponse à une demande de connexion incluant une identité décentralisée, DID, d'utilisateur cible d'un utilisateur cible envoyée par un portefeuille d'identité DID cible, acquérir (1210) une réclamation de justificatif d'identité cible de l'utilisateur cible à partir d'un centre d'identité de l'utilisateur cible ;
vérifier (1220) l'identité DID d'utilisateur cible et la réclamation de justificatif d'identité cible ; et
déterminer (1230) que l'utilisateur cible se connecte avec succès en utilisant l'identité DID d'utilisateur cible, en réponse au fait que l'identité DID d'utilisateur cible et la réclamation de justificatif d'identité cible réussissent la vérification ;
dans lequel l'étape d'acquisition (1210) de la réclamation de justificatif d'identité cible de l'utilisateur cible à partir du centre d'identité de l'utilisateur cible, comprend les étapes ci-dessous consistant à :
acquérir (1310) une adresse de site cible stockant la réclamation de justificatif d'identité cible, sur la base d'un résultat d'autorisation du portefeuille d'identité DID cible pour le vérificateur ; et
accéder (1320) à un site cible du centre d'identité sur la base de l'adresse de site cible pour obtenir la réclamation de justificatif d'identité cible ;
dans lequel l'étape d'accès (1320) au site cible du centre d'identité sur la base de l'adresse de site cible pour obtenir la réclamation de justificatif d'identité cible, comprend les étapes ci-dessous consistant à :
accéder au site cible du centre d'identité sur la base de l'adresse de site cible, pour obtenir une réclamation de justificatif d'identité cible chiffrée et un cryptogramme rechiffré ; dans lequel la réclamation de justificatif d'identité cible chiffrée et le cryptogramme rechiffré sont chiffrés et générés sur la base d'un mécanisme de rechiffrement par mandataire ;
déchiffrer le cryptogramme rechiffré au moyen d'une clé privée de vérificateur, afin d'obtenir une clé de chiffrement symétrique ; et
déchiffrer la réclamation de justificatif d'identité cible chiffrée au moyen de la clé de chiffrement symétrique, afin d'obtenir la réclamation de justificatif d'identité cible.

11. Procédé selon la revendication 10, dans lequel l'étape de vérification (1220) de l'identité DID d'utilisateur cible et de la réclamation de justificatif d'identité cible, comprend les étapes ci-dessous consistant à :
vérifier (1330) si l'utilisateur cible est un détenteur de l'identité DID d'utilisateur cible, selon une signature d'utilisateur de l'utilisateur cible, dans laquelle la signature d'utilisateur est incluse dans la demande de connexion ; et
en réponse à une vérification selon laquelle l'utilisateur cible est le détenteur de l'identité DID d'utilisateur cible, vérifier (1340) la réclamation de justificatif d'identité cible sur la base d'au moins l'un des éléments suivants : un émetteur émettant la réclamation de justificatif d'identité cible, un type de réclamation de justificatif d'identité, une période de validité, ou un état de révocation de la réclamation de justificatif d'identité cible.

12. Procédé selon la revendication 11, dans lequel l'étape consistant à vérifier (1330) si l'utilisateur cible est le détenteur de l'identité DID d'utilisateur cible, selon la signature d'utilisateur de l'utilisateur cible, comprend les étapes ci-dessous consistant à :
acquérir un document d'identité DID associé à l'identité DID d'utilisateur cible à partir d'un réseau de chaîne de blocs, sur la base de l'identité DID d'utilisateur cible ; et
vérifier la signature d'utilisateur de l'utilisateur cible, sur la base d'une clé publique d'utilisateur cible dans le document d'identité DID associé à l'identité DID d'utilisateur cible, afin de vérifier si l'utilisateur cible est le détenteur de l'identité DID d'utilisateur cible.

13. Dispositif électronique, comprenant :
au moins un processeur ; et
une mémoire, connectée en communication audit au moins un processeur ; dans lequel,
la mémoire stocke des instructions exécutables par ledit au moins un processeur, et les instructions, lorsqu'elles sont exécutées par ledit au moins un processeur, amènent ledit au moins un processeur à mettre en œuvre le procédé de vérification d'identité numérique selon l'une quelconque des revendications 1 à 9, ou à mettre en œuvre le procédé de vérification d'identité numérique selon l'une quelconque des revendications 10 à 12.

14. Support de stockage non transitoire lisible par ordinateur, stockant des instructions informatiques, les instructions informatiques étant utilisées pour amener l'ordinateur à mettre en œuvre le procédé de vérification d'identité numérique selon l'une quelconque des revendications 1 à 9, ou à mettre en œuvre le procédé de vérification d'identité numérique selon l'une quelconque des revendications 10 à 12.
